(19) Europäisches Patentamt European Patent Office Office européen des brevets

(11) **EP 2 859 676 B1**

(12) **EUROPÄISCHE PATENTSCHRIFT**

(45) Veröffentlichungstag und Bekanntmachung des Hinweises auf die Patenterteilung:
**31.01.2024 Patentblatt 2024/05**

(21) Anmeldenummer: **12819066.7**

(22) Anmeldetag: **27.12.2012**

(51) Internationale Patentklassifikation (IPC):
***H04J 14/02*** *(2006.01)*

(52) Gemeinsame Patentklassifikation (CPC):
**H04J 14/0282; H04J 14/0284;** H04J 14/0286

(86) Internationale Anmeldenummer:
**PCT/EP2012/077003**

(87) Internationale Veröffentlichungsnummer:
**WO 2013/164044 (07.11.2013 Gazette 2013/45)**

(54) **VERFAHREN UND VORRICHTUNG FÜR DEN AUFBAU UND BETRIEB EINES MODULAREN, HOCH SKALIERBAREN, SEHR EINFACHEN, KOSTENEFFIZIENTEN UND NACHHALTIGEN TRANSPARENTEN OPTISCH GEROUTETEN NETZES FÜR NETZKAPAZITÄTEN GRÖßER ALS 1 PETABIT/S**

METHOD AND DEVICE FOR CONSTRUCTING AND OPERATING A MODULAR, HIGHLY SCALABLE, VERY SIMPLE, COST-EFFICIENT AND SUSTAINABLE TRANSPARENT OPTICALLY-ROUTED NETWORK FOR NETWORK CAPACITIES OF GREATER THAN 1 PETABIT(S)

PROCÉDÉ ET DISPOSITIF POUR L'ÉTABLISSEMENT ET LE FONCTIONNEMENT D'UN RÉSEAU MODULAIRE, HAUTEMENT ÉVOLUTIF, TRÈS SIMPLE, ÉCONOMIQUE, DURABLE, TRANSPARENT ET À TRANSMISSION OPTIQUE POUR DES CAPACITÉS DE RÉSEAU SUPÉRIEURES À 1 PÉTABIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2012 DE 102012008989**

(43) Veröffentlichungstag der Anmeldung:
**15.04.2015 Patentblatt 2015/16**

(73) Patentinhaber: **Deutsche Telekom AG
53113 Bonn (DE)**

(72) Erfinder: **BRAUN, Ralf-Peter
12305 Berlin (DE)**

(74) Vertreter: **Vossius & Partner
Patentanwälte Rechtsanwälte mbB
Siebertstrasse 3
81675 München (DE)**

(56) Entgegenhaltungen:
- KATO K ET AL: "10-Tbps full-mesh WDM network based on cyclic-frequency arrayed-waveguide grating router", ECOC 2000. 26TH EUROPEAN CONFERENCE ON OPTICAL COMMUNICATION VDE VERLAG BERLIN, GERMANY, Bd. 1, 2000, Seite 105, XP9168986, ISBN: 3-8007-2567-3
- NOGUCHI K ET AL: "Scalability of full-mesh WDM AWG-STAR network", TECHNICAL DIGEST. SEVENTH OPTOELECTRONICS AND COMMUNICATIONS CONFERENCE IEICE TOKYO, JAPAN, Bd. 1, 2002, Seiten 72-73 vol.1, XP9168987, ISBN: 4-89114-026-7
- KAZUTO N ET AL: "Field Trial of Full-Mesh WDM Network (AWG-STAR) in Metropolitan/Local Area", JOURNAL OF LIGHTWAVE TECHNOLOGY, IEEE SERVICE CENTER, NEW YORK, NY, US, Bd. 22, Nr. 2, 1. Februar 2004 (2004-02-01), Seiten 329-336, XP011109846, ISSN: 0733-8724, DOI: 10.1109/JLT.2003.822317

- MORIWAKI O ET AL: "Full-Mesh Wavelength Channel Assignments Over Interconnected Star-Shaped Networks Employing Coprime-Channel-Cycle Arrayed-Waveguide Gratings", IEEE PHOTONICS TECHNOLOGY LETTERS, IEEE SERVICE CENTER, PISCATAWAY, NJ, US, Bd. 22, Nr. 5, 1. März 2010 (2010-03-01), Seiten 302-304, XP011302650, ISSN: 1041-1135
- BREGNI S ET AL: "Design of IP optical nodes based on AWG with shared tunable wavelength converters", OPTICAL SWITCHING AND NETWORKING, ELSEVIER, NL, vol. 8, no. 1, 1 January 2011 (2011-01-01) , pages 23-31, XP027491101, ISSN: 1573-4277, DOI: 10.1016/J.OSN.2010.09.001 [retrieved on 2010-10-01]
- PATTAVINA ET AL: "Performance of deflection routing algorithms in IP optical transport networks", COMPUTER NETWORKS, ELSEVIER, AMSTERDAM, NL, vol. 50, no. 2, 8 February 2006 (2006-02-08), pages 207-218, XP028042030, ISSN: 1389-1286, DOI: 10.1016/J.COMNET.2005.05.016 [retrieved on 2006-02-08]
- ANONYMOUS: SPIE, PO BOX 10 BELLINGHAM WA 98227-0010 USA, 1 January 2010 (2010-01-01), XP040505197,

## Beschreibung

Die vorliegende Erfindung betrifft ein Verfahren und Vorrichtung bzw. System für den Aufbau und Betrieb eines vorzugsweise modularen, hoch skalierbaren, sehr einfachen, kosteneffizienten und nachhaltigen transparenten optisch gerouteten Netzes (im Folgenden kurz TOR-NET genannt) für große Netzkapazitäten, vorzugsweise Netzkapazitäten von größer als 1 Petabit/s.

## HINTERGRUND DER ERFINDUNG

Die Kapazität der optischen Übertragungsnetze steigt jährlich um ca. 40%, so dass hoch skalierbare Netze aufgebaut werden müssen, um auch zukünftig die Übertragung der erwarteten Kapazitäten bereitstellen zu können. Neben der Bereitstellung hoch skalierbarer Netze für hunderte von Gigabit/s Netzkapazitäten müssen diese Netze auch sehr einfach und kosteneffizient aufgebaut und betrieben werden können.

Als Stand der Technik zur Erhöhung der Kanalkapazitäten sowie für die Bewältigung derart hoher Kapazitäten werden flexible elastische optische Netze mit variablen Kanalraster und Übertragungskomponenten, wie z.B. optische Sender mit variablen Bitraten, optische Empfänger mit variable Bitraten, optische Transceiver mit variablen Bitraten, variable optische Kanäle, variable optische Bandbreiten, variable optische Filter, variable optische re-konfigurierbare Add/Drop-Multiplexer, variabel optische Crossconnects, usw. diskutiert, z.B. in der Veröffentlichung von Schiano, Marco, et al., "Lambda switched future photonic network development", OFC 2012, paper OW4A.4" und unter den Begriffen "Flex Grid" in der Veröffentlichung von N. Sambo, et al., "Lightpath provisioning in wavelength switched optical networks with flexible grid," ECOC2011, paper We.10.P1.96 oder "Elastic Optical Network" wie beschrieben in dem EU Projekt, Celtic EO-Net, http://www.celticplus.eu/Projects/Celticprojects/Call7/EO-Net/eonet-default.asp.

Das in dem US Patent US 7,606,494 B1 offenbarte Kommunikationssystem beschreibt allgemeine Funktionen einer Netzwerkarchitektur, aber keine hochskalierenden Netzarchitekturen z.B. mit AWGs (Arrayed-Waveguide Gratings).

Im Gegensatz zu flexiblen Lösungen, wie oben oder beispielsweise in dem US Patent 7,761,007 B2 beschrieben, ist es eine Aufgabe der vorliegenden Erfindung ein Verfahren sowie eine Vorrichtung bzw. System zum Aufbau und Betrieb eines vorzugsweise hoch skalierbaren, sehr einfachen, kosteneffizienten und/oder nachhaltigen transparenten optisch gerouteten Netzes für große Netzkapazitäten, vorzugsweise für Netzkapazitäten von größer als 1 Petabit/s bereitzustellen.

In dem Artikel "100G in the network of Deutsche Telekom", OPTICAL FIBER TECHNOLOGY; Bd. 17, Nr. 5, Seiten 368-376 vom Erfinder der vorliegenden Erfindung, werden Punkt-zu-Punkt Verbindungen in Bezug auf verschiedene Modulationsverfahren diskutiert.

Der Artikel "Field Trial of Full-Mesh WDM Network (AWG-STAR) in Metropolitan/local Area", JOURNAL OF LIGHTWAVE TECHNOLOGY; IEEE SERVICE CENTER; NEW YOUR; NY; US; Bd. 22, Nr. 2, Seiten 329-336 beschreibt einen Feldversuch eines Knotennetzes, in dem ein einziges NxN AWG als Sternpunkt eines Citynetzes bzw. eines lokalen Netzes mit einer Übertragungslänge von weniger als 10km verwendet wird.

In dem Artikel von Pattavina,A, "Performance of deflection routing algirithms in IP optical transport networks", Computer Networks, Elsevier, Bd. 50, Nr. 2, 08.02.2006, Seiten 207 - 218, befasst sich mit der optischen Paketvermittlung in einem Full-IP-Transportnetz-Szenario. Für die Vermittlung von IP-Paketflüssen werden verschiedene Knotenarchitekturen betrachtet, die auf aktuellen optischen Routinggeräten basieren. Die Verkehrsleistung eines Mesh-Netzwerks wird mit den verschiedenen Knotenstrukturen evaluiert, wobei angenommen wird, dass die Knoten entweder Short Path Routing oder Deflection Routing verwenden.

Die Aufgabe der vorliegenden Erfindung wird durch die unabhängigen Verfahrens- bzw. Vorrichtungsansprüche bzw. die unten diskutierten Aspekte gelöst. Die abhängigen Ansprüche beschreiben weitere bevorzugte Ausführungsformen und Abwandlungen der Erfindung.

Insbesondere kann erfindungsgemäß in einem quasi passiven, festen und vollvermaschten transparenten OTN-Kernnetz nach ITU-T G.709 auf variable Komponenten verzichtet werden, sodass ein quasi passives optisches transparentes Kernnetz ausreicht, das im Wesentlichen nur passive Komponenten aufweist, wie beispielsweise Glasfasern und entsprechenden "Optischen Line Amplifiers" (OLAs), beispielsweise im Abstand von z.B. ca. 100 km Span-Länge. Erfindungsgemäß werden somit optische Ende-zu-Ende Verbindungskanäle bereitgestellt, die unabhängig voneinander überwacht und gemonitored werden können. Entsprechend können hochbitratige, beispielsweise >100Gbibs, optisch transparente DWDM (Dense Wavelength Division Multiplex) Ende-zu-Ende Verbindungskanäle über sehr große Entfernungen (beispielsweise >2000 km) bereitgestellt werden. Erfindungsgemäß können sich alle weiteren Komponenten, die die Funktionalität des optischen Transportnetzes im Wesentlichen bestimmen, in den Netzknoten am Rand des Netzes befinden.

So wird durch die vorliegende Erfindung eine Entkopplung des quasi passiven Kernnetzes von den passiven und/oder aktiven Edge-Funktionalitäten, die sich in bzw. an den Netzknoten am Kernnetzrand befinden, möglich, so dass die Kernnetzinfrastruktur für eine weitere Skalierung des Netzes nicht geändert oder angefasst werden muss. Dadurch ist eine kosteneffiziente Modularisierung und nachhaltige Skalierung des Netzes, z.B. durch den Einbau neuartiger Komponenten mit erhöhter Spektraler Effizienz nur in den Netzknoten N möglich, wodurch Capex (CAPital EXpenditure) und Opex (OPerational EXpenditure) Kosten reduziert werden können. Diese Modularisierung und/oder Entkopplung ist in den flexiblen Netzkonzepten, wie sie beispielsweise aus dem Stand der Technik bekannt sind, nicht gegeben.

Ein Wesentlicher Teil der vorliegenden Erfindung besteht aus der geschickten Verknüpfung und Kombination verschiedener Technologien, Netzarchitekturen und Netzstrukturen mit dem Ergebnis einer bisher nicht möglich gewesenen Entkopplung von Netzelementen und Funktionalitäten zur Nutzung für Modularisierungen, höchste Skalierung der Netzkapazität bis größer 1 PBit/s, Einfachheit und/oder Kosteneffizienz der Netzarchitektur und Management des Netzes für den Aufbau und Betrieb optischer Netze.

Für das Verständnis der vorliegenden Erfindung werden im Folgenden einige Komponenten, Netzarchitekturen und Netzstrukturen sowie erfindungsgemäße Aspekte exemplarisch beschrieben, wobei einzelne Komponenten und/oder Aspekte davon erfindungsgemäß verknüpft werden können, um die aufgeführten Vorteile der Erfindung zu erhalten.

## Modularisierung

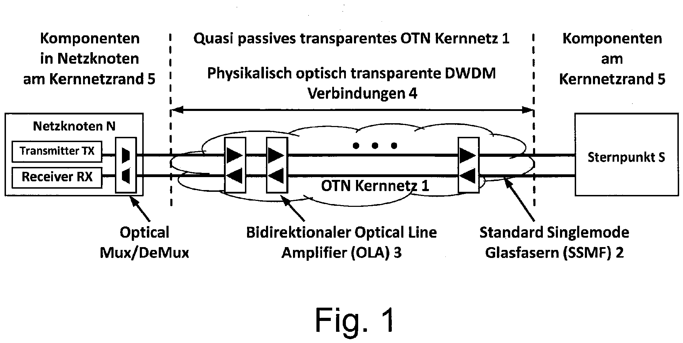

Die Erfindung stellt beispielsweise ein Verfahren und eine Vorrichtung für die Modularisierung von Netzen und Netzfunktionalitäten bereit. Dabei wird vorzugsweise das Netz in verschiedene Netzbereiche unterteilt, z.B. Kernnetz, Infrastruktur und Netzknoten am Kernnetzrand und außerhalb des Kernnetzrands Metro- und Regionalnetzknoten. Das Kernnetz verbindet insbesondere nur die Kernnetzknoten deren Anzahl sehr begrenzt ist, z.B. auf 12, siehe auch Fig. 1. Mit anderen Worten, das Kernnetz ist "innerhalb" des Kernnetzrands. Im Gegensatz dazu sind Metro- und Regionalnetzknoten mit den jeweiligen Kernnetzknoten verbunden. Eine Verbindung zwischen verschiedenen Metro- und Regionalknoten kann über die entsprechenden Kernnetzknoten erfolgen. In diesem Zusammenhang wird beispielsweise auf die ITU-T Recommendation G.709/Y.1331 verwiesen (Interfaces for the Optical Transport Network (OTN)) in der in der Fig. "15-19/G.709/Y.1331 - Example of TCM overhead field assignment" eine Unterteilung in verschiedenen Netze diskutiert wird. Insbesondere ist hier ein Network Operator NO1 als Metro Area Network (MAN), NO2 als Wide Area Network (WAN) und anschließend wieder ein NO3 (MAN) gezeigt, wobei das WAN (NO2) im Sinne eines Kernnetztes der vorliegenden Erfindung interpretiert werden kann. Insbesondere werden entsprechende Definitionen durch Verweis auf dieses Dokument in den Anmeldetext mit aufgenommen.

Zudem wird auf die "Technische Spezifikation MEF4" vom Metro Ethernet Forum verwiesen. Insbesondere soll ein Metronetz der vorliegenden Erfindung vorzugsweise als ein Metronetz gemäß dieser Spezifikation verstanden werden. Zudem ist eine Modularisierung in Bezug auf verschiedene Netzfunktionalitäten möglich, z.B. die transparenten optischen vollvermaschten Pfade, die vorzugsweise funktionell separiert sind und damit unabhängig voneinander. Ein wesentlicher Aspekt der Erfindung besteht darin, dass für eine Veränderung der Netzkapazität vorzugsweise das Kernnetz unverändert beibehalten werden kann und lediglich Änderungen am Kernnetzrand nötig sind. Mit anderen Worten, Veränderungen am Kernnetzrand bedeutet Veränderungen sind nur in den Kernnetzknoten notwendig, nicht aber auf den Strecken zwischen den Kernnetzknoten, d.h. das erfindungsgemäße Kernnetz, ein quasi passives OTN-Kernnetz, kann im Wesentlichen unverändert beibehalten werden selbst bei einer nachträglichen Skalierung.

## Stern Topologie

Erfindungsgemäß ist ein physikalisches Sternnetz bevorzugt. Bei einem Sternnetz sind alle N Netzknoten mit einem (einzelnen) Sternpunkt S verbunden. In den Druckschriften US 2008/0131128 und WO 98/33287 werden Sternstrukturen beschrieben, allerdings ohne AWG (Arrayed-Waveguide Gratings).

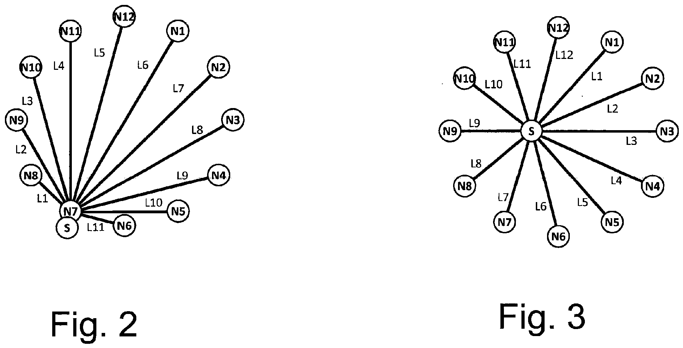

Bei einem Sternnetz kann sich der Sternpunkt S in einem der N Netzknoten befinden, z.B. in Knoten 7 wie später in der detaillierten Beschreibung mit Bezug auf Fig. 2 dargestellt ist, wobei in diesem Fall, N-1 Glasfaserlinks, vorzugsweise mit jeweils 2 Fasern, verwendet werden, um die verbleibenden N-1 Netzknoten mit dem, sich im N- ten Netzknoten befindlichen, Sternpunkt S zu verbinden. Der Sternpunkt kann sich aber auch an einem von den Netzknoten separaten Ort befinden. In einem solchen Fall werden dann N Glasfaserlinks benötigt, um alle N Netzknoten mit dem separaten Sternpunkt S zu verbinden, (siehe beispielsweise Fig. 3).

## Transparentes quasi passives OTN Kernnetz

Figur 1 zeigt beispielsweise ein quasi passives transparentes OTN ("Optical Transport Network") Kernnetz 1, das im Wesentlichen nur aus Standard Singlemode Glasfasern (SSMF; Standard Single Mode Fiber) 2 und Optischen Line Amplifier (OLA) 3 aufgebaut ist und die Netzknoten N, die sich am Rand des Kernnetzes 5 befinden, verbindet.

Zudem zeigt Figur 1 eine physikalische optisch transparente Verbindung 4 zwischen einem Netzknoten N und dem Sternpunkt S am Kernnetzrand 5 über das OTN Kernnetz 1 (siehe beispielsweise ITU-T G.709, "Optical Transport Network (OTN)"). Insbesondere sind keine Linkkompensationen für Chromatische Dispersion, Mean Group Delay, Polarisationsmodendispersion, oder sonstiges Link-Dispersionsmanagement notwendig.

**Randknoten Funktionalitäten**

Erfindungsgemäße Netzknoten am Kernnetzrand 5 können passive und/oder aktive optische und/oder elektrische Komponenten für die Übertragung sowie auch weitere Komponenten z.B. Switche, Router und weitere IP-Packet verarbeitende Komponenten aufweisen, insbesondere auch NxN AWGs.

**Passive AWG Komponente**

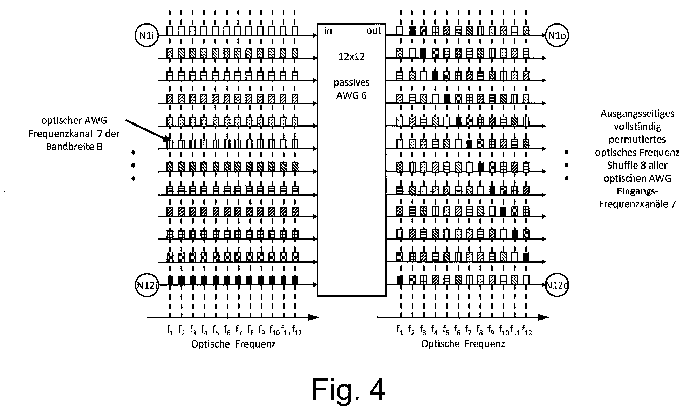

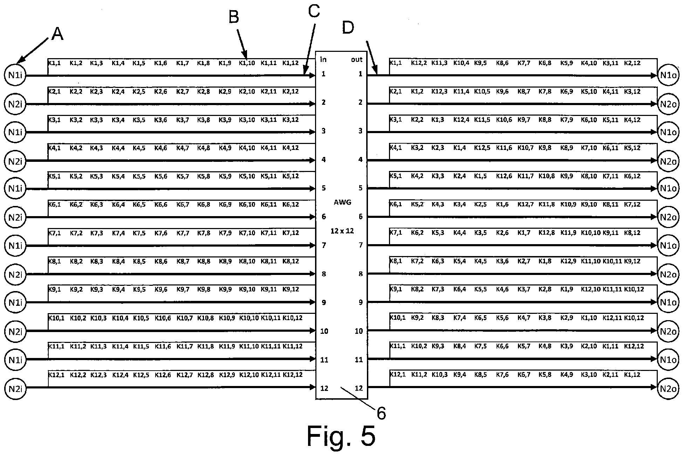

Die Figuren 4 und 5 zeigt eine passive optische Komponente eines $N \times N$ Port zyklischen AWGs (**A**rrayed **W**aveguide **G**rating) 6, das sich im Sternpunkt S befindet und alle Netzknoten N, die sich am Kernnetzrand 5 befinden, miteinander verbindet (hier mit N = 12). Die Anzahl aller Netzknoten N bestimmt dabei die Anzahl der N Eingangsports und N Ausgangsports des AWGs 6. AWGs werden derzeit z.B. als verlustarme $N \times 1$ Multiplexer und $1 \times N$ Demultiplexer in DWDM Systemen eingesetzt, wobei optische AWG Frequenzkanäle 7 auf N verschiedenen optischen Eingangsfrequenzen und N verschiedenen Eingangsglasfasern bzw. Eingangsports auf eine Ausgangsfaser unter Beibehaltung der optischen Frequenzen, optisch passiv geroutet werden.

In den Patentanmeldungen EP 1 761 102 A1 und US 2007/0092248 werden Zusammenschaltungen von AWGs betrachtet die sich jedoch von der vorliegenden Erfindung unterscheiden. In der Anmeldung EP 1 594 241 A1 werden mit AWG Systeme für dynamisch rekonfigurierbare Netz-Topologien behandelt.

Gemäß der vorliegenden Erfindung werden jedoch bevorzugt keine dynamischen Netztopologien für die Anwendung eines AWG betrachtet. Insbesondere werden bevorzugt modulare und unabhängige Netzkonzepten betrachtet, Bereiche und Komponenten, sowie die Bandbreiten der AWG Frequenzkanäle und der DWDM Frequenzkanäle, die spektrale Effizienz der Transponder bis zu 7Bit/s/Hz für transparente Übertragungslängen bis zu 2000 km für die Erhöhung und Skalierung der Übertragungskapazität zwischen 2 Knoten und für das gesamte vollvermaschte Netz bis hin zu größer als 1 PBit/s für robuste Hochbitratige Übertragungen >100 GBit/s pro DWDM Frequenzkanal. Insbesondere steht erfindungsgemäß die Entkopplung der Netzbereiche und Komponenten im Vordergrund. Für geringere Entfernungen kann die spektrale Effizienz auch höhere Werte annehmen, z.B. ca. 9Bit/s/Hz bei <400km (siehe beispielsweise Fig.35 in dem Artikel von Referenz René-Jean Essiambre et al., "Capacity Limits of Optical Fiber Networks", Journal of Lightwave Technology, Vol. 28, No. 4, February 15, 2010).

**Funktionalität der AWGs bzgl. der optischen Frequenzebene**

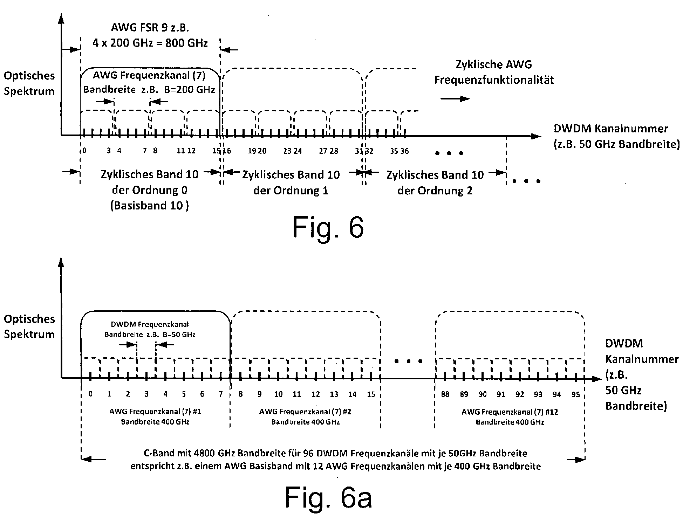

Die Zusammenhänge der Funktionalitäten eines AWGs sind beispielhaft in Figur 6 und Figur 6a dargestellt. Insbesondere besitzen AWGs eine zyklische Funktionalität bzgl. der optischen Frequenzebene die durch den Freien Spektralbereich (**F**ree **S**pectral **R**ange, FSR) 9 definiert ist. Der Freie Spektralbereich FSR, die Bandbreite der AWG Frequenzkanäle $B_{AWG-Kanal}$ und die Anzahl Z der AWG Frequenzkanäle pro Freiem Spektralbereich FSR sind insbesondere durch folgende Gleichung verknüpft.

$$FSR = Z * B_{AWG-Kanal}$$

**Skalierbarkeit der Portanzahl der passiven $N \times N$ AWG Komponente**

Vorzugsweise können die Parameter der AWGs, d.h. die Anzahl der Eingangsports, die Anzahl der Ausgangsports, die Bandbreite der AWG Frequenzkanäle, a-thermale temperaturunabhängige AWGs und die Filtercharakteristik für den Verlauf der AWG-Filterkurven, entsprechend den Anforderungen spezifisch designed/angepasst werden. Insbesondere können für AWGs auch die Anzahl der Ports von $N \times N$, die Bandbreite der AWG Frequenzkanäle, sowie der Freie Spektralbereich (FSR) in weiten Bereichen variiert und gewählt werden. Durch die Wahl der Parameter können AWGs für unterschiedlich ausgeprägte Anwendungsfälle entsprechend angepasst werden. Dadurch werden verschiedenste Anwendungsfälle z.B. für unterschiedliche Knotenanzahlen möglich.

Die Anzahl N der Ports eines NxN AWGs, der Freie Spektralbereich FSR eines AWGs und die Bandbreite der AWG Frequenzkanäle BAWG-Kanal sind durch folgende Gleichung verknüpft.

$$B_{AWG-Kanal} = \frac{FSR}{N}$$

Wie beispielhaft in Figur 6a dargestellt, wird für den Freien Spektralbereich FSR eine geringfügig erweiterte Bandbreite des optischen C-Bands von 4,8 THz angenommen, die das zyklischen Basisband der Ordnung 0 ausfüllt. Bei einer beispielhaft angenommenen C-Band Bandbreite von 4,38 THz (100%) wären vorzugsweise zusätzlich 0,42 THz Bandbreite nötig (ca. 9,6%, d.h. 9-10%, um die 4,8 THz zu erreichen). Vorzugsweise ist unter geringfügig erweiterter Bandbreite eine Erweiterung um 1-12%, vorzugsweise 5-11%, weiter bevorzugt 9-10% zu verstehen.

Für diesen Fall berechnet sich die Bandbreite der AWG Frequenzkanäle eines NxN Port AWGs entsprechend folgender Gleichung:

$$B_{AWG-Kanal}[GHz] = \frac{4800\ GHz}{N}$$

Damit kann die gesamte bzw. geringfügig erweiterte C-Band Bandbreite (conventionel "erbium window" 1530-1565 nm mit ca. 4,38 THz Bandbreite) von ca. 4,8 THz ausgenutzt werden, womit sich die in Tabelle 1 angegebenen Zahl der Duplex AWG Frequenzkanäle und die Duplex Bandbreite zwischen 2 Knoten in Abhängigkeit von der Anzahl N der Netzknoten bzw. NxN AWG Ports ergeben. Die angegebenen Parameter können heute für N × N Port AWG realisiert werden.

Insbesondere wird ein DWDM System mit z.B. 96 Frequenzkanälen mit 50 GHz Bandbreite einschließlich optischer Verstärker (EDFA erbium doped fiber amplifier) von Alcatel-Lucent unter dem Produkt 1626 LM angeboten, allerdings ohne die Verwendung von NxN AWGs. Diese 4,8THz sind insbesondere vorteilhaft aufgrund von 96 × 50GHz, wobei bei einem 12 Knoten Kernnetz mit 1626 LM System 12x 400 GHz Bandbreite zur Verfügung stehen.

Für N × N Port AWGs sind auch größere Portzahlen als N > 96möglich, z.B. auch 100 × 100 Port AWGs oder darüber hinaus, so dass die vorliegende Erfindung nicht auf eine bestimmte Anzahl N von NxN AWG Ports und damit Knotenanzahlen in Netzen begrenzt ist.

Zudem ist die vorliegende Erfindung auch nicht auf das optische C-Band beschränkt, so dass der Freie Spektralbereich FSR, die Anzahl der NxN Ports und die Bandbreite der AWG Frequenzkanäle in weiten Bereichen gewählt werden können.

**Zyklische Funktionalität der AWGs bzgl. der optischen Frequenzebene**

Wie in Figur 6 gezeigt, besitzen AWGs eine zyklische Funktionalität bzgl. der optischen Frequenzebene die durch den Freien Spektralbereich (FSR) 9 definiert ist. Damit können weitere zyklische Frequenzbänder 10 mit entsprechenden weiteren unabhängigen vollvermaschten Netzebenen für die N Netzknoten bereitgestellt werden, wodurch die Netzkapazität vervielfacht werden kann. Dazu können weitere optische Frequenzbänder bzw. Wellenlängenbänder herangezogen werden, z.B. auch das L-Band (Lang-Wellenlängenband).

Andererseits kann auch nur das zyklische AWG Frequenzbasisband 10 der Ordnung 0 des N × N AWGs, dessen Bandbreite dem Freien Spektralbereich (FSR) 9 des AWGs entspricht, genutzt werden, wobei die Bandbreite der optischen AWG Frequenzkanäle 7 und der FSR 9 durch das Design des AWGs gewählt und festgelegt werden. Dadurch können auch in dem zyklischen Frequenzbasisband 10 mit 0-ter Ordnung N optische AWG Frequenzkanäle 7 mit entsprechend großer Kanalbandbreite gewählt werden. Diese Parameter für N × N Port AWGs (Anzahl N der Knoten des Kernnetzes, Anzahl N der AWG Eingangsports, Anzahl N der AWG Ausgangsports, Freier Spektralbereich FSR 9 des AWGs z.B. C-Band, Bandbreite der optischen AWG Frequenzkanäle und die Zahl für die Nutzung der zyklischen Frequenzbänder 10) bestimmen vorzugsweise die Architektur des Kernnetzes.

Davon unabhängig können weitere flexible Funktionalitäten im Rahmen der vorgegebenen Kernnetzstrukturen 1 durch Komponenten in den Netzknoten am Kernnetzrand 5 eingesetzt werden.

**L-Band Nutzung**

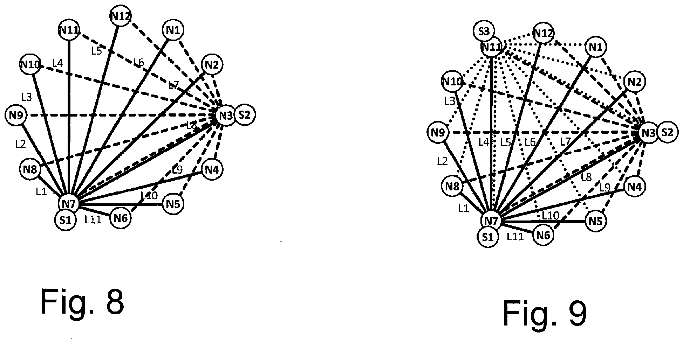

Nutzung der zyklischen AWG FSR Frequenzfunktionalität 8 für die Erweiterung des nutzbaren Frequenzbereiches auf das L-Band (optisches Lang Wellenlängen Band; ca. 1565-1625 nm), wobei für das L-Band vorzugsweise erweiterte OLAs (Optical Line Amplifiers) eingesetzt werden, so dass Eingriffe in die Glasfaserinfrastruktur des Kernnetzes notwendig sein würden. Zusätzlich oder Alternativ könnte für die weitere Skalierung der Netzkapazität auch ein weiteres physikalisches Sternnetz aufgebaut werden wie beispielhaft in Figur 8 und Figur 9 dargestellt.

## Passives optisches Routing der AWG Frequenzkanäle

Für die vorliegende Erfindung wird vorzugsweise die Funktionalität des passiven optischen Routings der AWG Frequenzkanäle auf N Ausgangsports bzw. Ausgangsfasern des AWGs erweitert, so dass nach Figur 4 und Figur 5 eine vollständige Permutation der z.B. N = 12 optischen AWG Frequenzkanäle 7 bei den Frequenzen f1 bis f12 auf der ersten Eingangsfaser bzw. Eingangsports N1i auf alle Ausgangsports N1o bis N12o bzw. Ausgangsfasern, insbesondere unter Beibehaltung ihrer optischen Frequenzen f1 bis f12 optisch passiv geroutet werden.

Optisches Routing, allerdings ohne die Verwendung von AWGs, wird beispielsweise in den beiden Patentschriften US 7,356,258 B und US 7,965,911 B behandelt.

## Wiederverwendung der optischen Frequenzkanäle

Dazu wird vorzugsweise eine Wiederverwendung der optischen Frequenzkanäle genutzt, d.h. auf allen Eingangsfasern bzw. Eingangsports und Ausgangsfasern bzw. Ausgangsports des AWG werden dieselben Frequenzkanäle mit den entsprechenden unterschiedlichen DWDM Kanälen bzw. Übertragungssignalen wiederverwendet. Hierbei wird gemäß der vorliegenden Erfindung vorzugsweise im Gegensatz zu der in WO 02/04989 A2 offenbartem Verfahren kein Cross Connect benutzt.

## ITU-T DWDM grid

Erfindungsgemäß wird vorzugsweise ein festes standardisiertes ITU-T G.694.1 DWDM grid (siehe ITU-T G.694.1, "DWDM frequency grid") im geringfügig erweiterten optischen C-Band (optisches conventionel "erbium window" Wellenlängen Band) genutzt. Z.B. können 100 Gbit/s Übertragungssignale über eine DWDM Kanalbandbreite von 50 GHz über mehr als >2000 km optisch transparent übertragen werden, womit eine Spektrale Effizienz für das Übertragungsverfahren von 2 Bit/s/Hz vorliegt. Im geringfügig erweiterten C-Band können 96 DWDM optische Kanäle mit 50 GHz Bandbreite durch einen einzigen OLA 3 (Erbium doped fiber amplifier (EDFA)) optisch verstärkt werden. Somit beträgt die optische Bandbreite 96 ×50 GHz = 4800 GHz, die pro Glasfaser bzw. Ende-zu-Ende DWDM Link L für Übertragungen zur Verfügung steht.

## Flexibles Grid

Ein weiterer Aspekt der Erfindung betrifft die Nutzung eines flexiblen Grids. Die in den AWG Frequenzkanälen bereitgestellte optische Übertragungsbandbreite kann aufgrund der Modularität und Unabhängigkeit der transparenten optischen Pfade über das AWG wahlfrei genutzt werden, z.B. auch durch flexible Komponenten einer "Flex Grid" Technologie, wie z.B. flexible adaptive Transmitter und Empfänger bzw. Transceiver mit variablen Bitraten, flexible optische Komponenten wie z.B. flexible optische Filter, flexible rekonfigurierbare optische Add/Drop Multiplexer, flexible wellenlängenselektive Switche WSS usw. (siehe US 2002/0048066 A1). Diese Komponenten werden gemäß der vorliegenden Erfindung aber vorzugsweise nur in den Netzknoten am Kernnetzrand eingesetzt, so dass die Modularität und Unabhängigkeit zwischen Kernnetz und Kernnetzrand gewahrt bleibt.

## Spektrale Effizienz

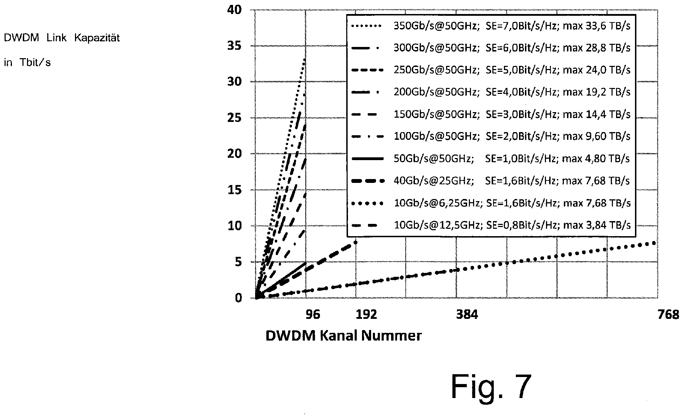

Die Erhöhung der Spektralen Effizienz von Übertragungsformaten führt zu einer besseren Ausnutzung der vorhandenen Bandbreite von 4800 GHz. Der Zusammenhang zwischen den DWDM Link Kapazität in Terabit/s in Abhängigkeit von der DWDM Kanal-Übertragungsrate und dem Kanalfrequenzraster (Frequenz Grid) (siehe ITU-T G.694.1, "DWDM frequency grid") ist in Figur 7 dargestellt. Die Spektrale Effizienz ist dabei durch das Verhältnis der DWDM Kanal-Übertragungsrate zu der zur Verfügung stehenden DWDM Kanal-Bandbreite definiert und wird in Bit/s/Hz angegeben.

Durch weitere Innovationen, z.B. Erhöhung der Multi-Level Modulationsverfahren, digitale Signalprozessoren in Sendern, digitale Signalprozessoren in Empfängern, usw. wird die Spektrale Effizienz (SE) ebenfalls erhöht, wobei die optisch transparente Reichweite für DWDM Kanäle größer als >2000 km beträgt. Auch hier ist zu beachten, dass diese weiteren Innovationen vorzugsweise nur in den Netzknoten am Kernnetzrand eingesetzt werden, so dass die Modularität und Unabhängigkeit zwischen Kernnetz und Kernnetzrand gewahrt bleibt.

Beispielsweise wurden mit Multilevel Modulationsverfahren DWDM KanalÜbertragungsraten von 200 Gbit/s in DWDM Kanal-Bandbreiten von 50GHz über Entfernungen größer als >2000 km demonstriert, so dass eine Spektrale Effizienz von 4 Bit/s/Hz demonstriert wurde (siehe Jianjun Yu, et al., "Field Trial Nyquist-WDM Transmission of 8×216.4Gb/s PDM-CSRZ-QPSK Exceeding 4b/s/Hz Spectral Efficiency ", OFC 2012, post deadline paper PDP5D.3).

Mit zunehmender Spektraler Effizienz wird jedoch das benötigte optische Signal-zu-Rausch-Verhältnis (OSNR;

Optical Signal-to-Noise Ratio) größer und die Reichweite der optisch transparenten Übertragungslänge nimmt ab. Dieser Sachverhalt wird durch die Shannon-Grenze beschrieben. Daneben kann das OSNR nicht beliebig durch die optischen Eingangsleistungen erhöht werden, da die Übertragung dann durch optische Nichtlinearitäten begrenzt wird. Damit ergibt sich für eine transparente Übertragungslänge von ca. 2000 km eine maximale Spektrale Effizienz von ca. 7 Bit/s/Hz (siehe Rene-Jean Essiambre, Gerhard Kramer, Peter J. Winzer, Gerard J. foschini, Bernhard Goebel, "Capacity Limits of Optical Fiber Networks", Journal of Lightwave Technology, Vol. 28, No. 4, February 15, 2010, pp. 662 -701).

**Skalierbarkeit der DWDM Linkkapazität**

Nach dem Stand der Technik können 96 DWDM Kanäle mit jeweils 50 GHz Bandbreite gemeinsam über eine Standard Singlemode Faser (SSMF; Standard Single Mode Fiber) übertragen und durch optische Line Amplifier (OLA, EDFA) verstärkt werden (z.B. Alcatel-Lucent 1626 LM System). Die zur Verfügung stehende Bandbreite beträgt damit 4800 GHz bzw. 4,8 THz.

Die DWDM Link Kapazität im C-Band beträgt somit in Abhängigkeit von der Spektralen Effizienz (SE) 4800 Gbit/s $\times$ SE oder auch 4,8 Tbit/s $\times$ SE.

Mit Spektralen Effizienten von SE = 1 Bit/s/Hz bis SE = 7 Bit/s/Hz können damit folgende DWDM Link Kapazitäten, insbesondere für Entfernungen von mehr als 2000km erreicht werden:

Spektrale Effizienz 1 Bit/s/Hz $\Rightarrow$ Linkkapazität: 4,8 THz $\times$ 1 Bit/s/Hz = 4,8 TBit/s

Spektrale Effizienz 2 Bit/s/Hz $\Rightarrow$ Linkkapazität: 4,8 THz $\times$ 2 Bit/s/Hz = 9,6 TBit/s

Spektrale Effizienz 3 Bit/s/Hz $\Rightarrow$ Linkkapazität: 4,8 THz $\times$ 3 Bit/s/Hz = 14,4 TBit/s

Spektrale Effizienz 4 Bit/s/Hz $\Rightarrow$ Linkkapazität: 4,8 THz $\times$ 4 Bit/s/Hz = 19,2 TBit/s

Spektrale Effizienz 5 Bit/s/Hz $\Rightarrow$ Linkkapazität: 4,8 THz $\times$ 5 Bit/s/Hz = 24,0 TBit/s

Spektrale Effizienz 6 Bit/s/Hz $\Rightarrow$ Linkkapazität: 4,8 THz $\times$ 6 Bit/s/Hz = 28,8 TBit/s

Spektrale Effizienz 7 Bit/s/Hz $\Rightarrow$ Linkkapazität: 4,8 THz $\times$ 7 Bit/s/Hz = 33,6 TBit/s

Da dazu nur die Sende- und Empfänger-Komponenten in den Netzknoten am Kernnetzrand 5 eingesetzt bzw. ersetzt werden müssen (das Kernnetz kann unverändert beibehalten werden), ist die hier beschriebene Erfindung zukunftssicher, hoch skalierbar und sehr kosteneffektiv für den Netzaufbau mit entsprechenden "Capex" Kosten und für den Betrieb mit entsprechenden "Opex" Kosten. Es können auch deutlich höhere spektrale Effizienzen erreicht werden, wobei aber die Reichweite abnimmt. Somit sind nach heutigem Stand die Interfaces mit SE > 7Bit/s/Hz nicht mehr wahlfrei bis 2000 km einsetzbar, sondern sind üblicherweise von der Übertragungslänge abhängig.

**Skalierbarkeit der Netzkapazität**

Wird beispielsweise ein Kernnetz mit 96 Knoten und ein 96$\times$96 Port AWG angenommen, dann ergeben sich 96 $\times$ 95 / 2 = 4560 optische DWDM Links mit je 50 GHz Bandbreite für eine vollvermaschte Netzstruktur. Mit Spektralen Effizienten von SE = 1 Bit/s/Hz bis SE = 6 Bit/s/Hz ergeben sich folgende Netzkapazitäten von teilweise größer >1PBit/s

Spektrale Effizienz 1 Bit/s/Hz $\Rightarrow$ Netzkapazität: 4560 $\times$ 50 GHz $\times$ 1 Bit/s/Hz = 0,228 PBit/s

Spektrale Effizienz 2 Bit/s/Hz $\Rightarrow$ Netzkapazität: 4560 $\times$ 50 GHz $\times$ 2 Bit/s/Hz = 0,456 PBit/s

Spektrale Effizienz 3 Bit/s/Hz $\Rightarrow$ Netzkapazität: 4560 $\times$ 50 GHz $\times$ 3 Bit/s/Hz = 0,684 PBit/s

Spektrale Effizienz 4 Bit/s/Hz $\Rightarrow$ Netzkapazität: 4560 $\times$ 50 GHz $\times$ 4 Bit/s/Hz = 0,912 PBit/s

Spektrale Effizienz 5 Bit/s/Hz $\Rightarrow$ Netzkapazität: 4560 $\times$ 50 GHz $\times$ 5 Bit/s/Hz = 1,140 PBit/s

Spektrale Effizienz 6 Bit/s/Hz $\Rightarrow$ Netzkapazität: 4560 $\times$ 50 GHz $\times$ 6 Bit/s/Hz = 1,368 PBit/s

Spektrale Effizienz 7 Bit/s/Hz $\Rightarrow$ Netzkapazität: 4560 $\times$ 50 GHz $\times$ 7 Bit/s/Hz = 1,596 PBit/s

Vorzugsweise können hier die Interfaces wahlfrei und unabhängig von der Länge bis zu 2000 km eingesetzt werden, da die SE nur bis 7Bit/s/Hz betrachtet wird, die für bis zu 2000 km gelten.

In dieser Erfindung wird unter Verwendung eines zyklischen NxN AWGs eine einfache Netzarchitektur betrachtet, im Gegensatz zu den Verfahren in EP 1 761 102 A1 und US 6,947,670 B1 wo komplizierte Knotenarchitekturen betrachtet werden.

**Vollvermaschung auf der optischen Frequenzebene**

Dasselbe Prinzip gilt entsprechend auch für die anderen Eingangs- und Ausgangsports des AWG, so dass z.B. mit nur N = 12 wiederverwendeten optischen AWG Frequenzkanälen 7 eine Vollvermaschung mit N × (N-1) = 132 simplex, d.h. nur in eine Richtung, oder N × (N-1) / 2 = 66 duplex Übertragungskanälen, d.h. Hin- und Rückkanäle, in der optischen Ebene bereitgestellt werden können. Insgesamt können die 12 Glasfasern mit jeweils 12 optischen Frequenzkanälen 12 × 12 = 144 optische AWG Frequenzkanäle 7 bereitstellen. D.h. es liegt ausgangsseitig ein vollständig permutiertes optisches Frequenzshuffel 8 aller optischen AWG Eingangs-Frequenzkanäle 7 vor, so dass auf der optischen Frequenzebene ein vollvermaschtes Netz zwischen allen Netzknoten bereitgestellt werden kann.

Bei der Vollvermaschung werden aber 12 Frequenzkanäle, die auf sich selber geroutet werden, nicht berücksichtigt. Damit kann mit einem einzelnen N × N AWG 6 mit N Eingangsports und N Ausgangsports auf N optischen wiederverwendeten optischen AWG Frequenzkanälen 7 mit einer Bandbreite $B_{AWG\text{-}Kanal}$ der AWG Frequenzkanäle ein vollvermaschtes Netz für N Netzknoten mit insgesamt N × (N-1) / 2 unabhängigen duplex Übertragungskanälen, d.h. Hin- und Rückkanäle, bereitgestellt werden.

**Bandbreite und Kapazität des transparenten Knoten-zu-Knoten Pfades**

Die in dieser Erfindung durch ein NxN AWG bereitgestellte bidirektionale Bandbreite $B_{Knoten\text{-}zu\text{-}Knoten}$ zwischen 2 beliebigen Knoten bestimmt sich im Wesentlichen aus der Anzahl N der Netzknoten bzw. Ports des NxN AWGs, der Bandbreite $B_{AWG\text{-}Kanal}$ der AWG Frequenzkanäle und der Anzahl ZY der genutzten zyklischen FSR Bänder zu

$$B_{Knoten-zu-Knoten} = ZY * B_{AWG-Kanal}$$

Die entsprechende

Die Anzahl der Duplex AWG Frequenzkanäle und Bandbreite zwischen 2 Knoten, die in einem vollvermaschten Netz durch ein NxN AWG bereitgestellt werden, für einen AWG Freien Spektralbereich FSR = 4,8 THz (erweitertes C-Band), sind in Abhängigkeit von der Anzahl N der Netzknoten bzw. NxN AWG Ports in Tabelle 1 zusammengefasst.

Insbesondere kann diese Knoten-zu-Knoten Bandbreite durch flexible Komponenten mit variabler Frequenzzuweisung oder durch Zuweisung von festen ITU-T DWDM Frequenz Grids genutzt werden, wobei in beiden Fällen die Komponenten in den Knoten am Kernnetzrand positioniert sind und unabhängig vom passiven Kernnetz sind.

Die Knoten-zu-Knoten Kapazitäten $C_{Knoten\text{-}zu\text{-}Knoten}$ sind neben der bereitgestellten Bandbreite $B_{Knoten\text{-}zu\text{-}Knoten}$ der Knoten-zu-Knoten Pfade zusätzlich von den Spektralen Effizienten (SE) der Sender und Empfänger in der Netzknoten am Kernnetzrand bestimmt, die unabhängig durch flexible bitratenadaptive oder feste bitratenkonstante Transceiver für die entsprechenden Bandbreiten individuell bereitgestellt werden. Die Kapazität $C_{Knoten\text{-}zu\text{-}Knoten}$ zwischen zwei Knoten berechnet sich zu

$$C_{Knoten-zu-Knoten} = B_{Knoten-zu-Knoten} * SE$$

Für Spektrale Effizienten von 1 Bit/s/Hz bis 7 Bit/s/Hz ergeben sich in Abhängigkeit von der Bandbreite der AWG Frequenzkanäle über das NxN Port AWG entsprechend Tabelle 2 Kapazitäten von 0,050 TBit/s bis zu 11,2 TBit/s für die transparenten Pfade zwischen 2 Knoten. Da alle Knoten-zu-Knoten Verbindungen durch die Vollvermaschung des Netzes durch transparente optische Verbindungen unabhängig voneinander sind, können die Transceiver und damit die Spektrale Effizienten und damit auch die Knoten-zu-Knoten Kapazitäten für die einzelnen Pfade frei gewählt werden, wobei aber die optischen Frequenzen für die entsprechenden Pfade festgelegt sind.

**Bandbreite und Kapazität des vollvermaschten Netzes**

Die in dieser Erfindung durch ein NxN AWG bereitgestellte bidirektionale Bandbreite $B_{Vollvermaschung}$ eines vollvermaschten Netzes bestimmt sich aus der Anzahl N der Netzknoten bzw. Ports des NxN AWGs, der Bandbreite $B_{AWG\text{-}Kanal}$ der AWG Frequenzkanäle und der Anzahl ZY der genutzten zyklischen FSR Bänder zu

$$B_{Vollvermschung} = ZY * N * \frac{N - 1}{2} * B_{AWG-Kanal}$$

Die entsprechende Anzahl der Duplex AWG Frequenzkanäle sowie die Netzbandbreite, die in einem vollvermaschten Netz durch ein NxN AWG bereitgestellt werden, für einen AWG Freien Spektralbereich FSR = 4,8 THz, sind in Abhängigkeit von der Anzahl N der Netzknoten bzw. NxN AWG Ports in Tabelle 3 zusammengefasst.

Insbesondere kann diese Bandbreite des vollvermaschten Netzes durch flexible Komponenten mit variabler Frequenzzuweisung oder durch Zuweisung von festen ITU-T DWDM Frequenz Grids genutzt werden, wobei in beiden Fällen die Komponenten in den Knoten am Kernnetzrand positioniert sind und unabhängig vom passiven Kernnetz sind.

Die Kapazität des vollvermaschen Netzes $C_{Full\ Mesh}$ ist neben der bereitgestellten Bandbreite des vollvermaschten Netzes $B_{Vollvermaschung}$ zusätzlich von den Spektralen Effizienten (SE) der Sender und Empfänger in der Netzknoten am Kernnetzrand bestimmt, die unabhängig durch flexible bitratenadaptive oder feste bitratenkonstante Transceiver für die entsprechenden Bandbreiten individuell bereitgestellt werden. Die Netzkapazität des vollvermaschten Netzes berechnet sich zu

$$C_{Vollvermaschung} = B_{Vollvermaschung} * SE$$

Für Spektrale Effizienten von 1 Bit/s/Hz bis 7 Bit/s/Hz ergeben sich in Abhängigkeit von der Anzahl der Netzknoten und entsprechender Bandbreite der AWG Frequenzkanäle über das NxN Port AWG entsprechend Tabelle 4 und Tabelle 2 Kapazitäten von 4,8 TBit/s bis zu 1596 TBit/s = 1,596 PBit/s für die transparenten Pfade des vollvermaschten Netzes. Da alle Knoten-zu-Knoten Verbindungen durch die Vollvermaschung des Netzes durch transparente optische Verbindungen unabhängig voneinander sind, können die Transceiver und damit die Spektrale Effizienten und damit auch die Knoten-zu-Knoten Kapazitäten für die einzelnen Pfade frei gewählt werden, wobei aber die optischen Frequenzen für die entsprechenden Pfade festgelegt sind.

**Robuste Hochgeschwindigkeitsübertragung**

Vorzugsweise kann eine robuste Hochgeschwindigkeitsübertragung erreicht werden durch Nutzung von optischen Transceivern mit Digitalen Signal Prozessoren (DSP), um störende Einflüsse der Glasfaserübertragung für hochbitratige Signale im Sender und / oder Empfänger auf elektronischem Wege zu kompensieren. Dadurch sind robuste Übertragungen mit Plug & Play Funktionalität möglich, wobei vorzugsweise keine DWDM Linkkompensationen oder Dispersionsmanagement für chromatische Dispersion, Mean Group Delay oder Polarisationsmodendispersion, usw. benötigt werden.

**High speed z.B. 100 Gbit/s Transceiver**

Stand der Technik sind 100 Gbit/s Transceiver nach dem OIF 100G Ultra Long Haul DWDM Framework Dokument OIF 100G Ultra Long Haul DWDM Framework Document http://www.oiforum.com/public/documents/OIF-FD-100G-DWDM-01.0.pdf die ein "dual polarization quadrature phase shift keying (DP QPSK) modulation with a coherent receiver" ... "and digital signal processing (DSP)" im Empfänger spezifizieren. Damit ist eine robuste Übertragung mit einer Spektrale Effizienz von 2 Bit/s/Hz möglich, so dass 100 Gbit/s Übertragungskapazität in einem optischen ITU-T DWDM Kanal mit 50 GHz optischer Bandbreite über eine Entfernung > 2000 km transparent optisch übertragen werden können (siehe René-Jean Essiambre, Gerhard Kramer, Peter J. Winzer, Gerard J. foschini, Bernhard Goebel, "Capacity Limits of Optical Fiber Networks", Journal of Lightwave Technology, Vol. 28, No. 4, February 15, 2010, pp. 662 -701). Diese high speed Transceiver werden erfindungsgemäß vorzugsweise in entsprechende Packet verarbeitende Switche und/oder Router in den Netzknoten eingesetzt, wodurch vorzugsweise weitere Transponder vermieden werden können (siehe US 2011/0013911 A1 und US 2010/0098406).

**Reichweite der transparenten Übertragung**

Vorzugsweise werden optische Übertragungen mit Reichweiten von > 2000 km über optisch transparente unkompensierte DWDM Kanäle realisiert. Diese Funktionalität ist beispielsweise durch die oben beschriebenen Transceiver gegeben, wobei beispielsweise 40 Gbit/s und 100 Gbit/s Transceiver verfügbar sind. Insbesondere ergibt sich eine Abhängigkeit zwischen der erreichbaren Spektralen Effizienz und der erreichbaren transparenten optischen Übertragungslänge. Wie oben bereits diskutiert, liegt die erreichbare Spektrale Effizienz für eine DWDM Glasfaserübertragungen ohne Dispersionskompensation bei ca. 7 Bit/s/Hz.

**Anwendung der Erfindung in vielen Ländern möglich**

Die erfindungsgemäße modulare Untergliederung in ein Kernnetz mit entsprechenden Netzknoten am Kernnetzrand, erlaubt es, dass die erfindungsgemäßen Kernnetze 1 in vielen Ländern aufgebaut werden können, insbesondere auch in Gebieten, deren nationale transparente optische Übertragungslängen größer als > 2000 km betragen, wobei die Spektrale Effizienz und die Übertragungslängen abgestimmt werden müssen. Bereits heute können wesentlich größere Entfernungen als 2000 km mit 40 Gbit/s und auch 100 Gbit/s Übertragungskapazitäten erreicht werden.

**Zukunftssichere Netzskalierung**

Da erfindungsgemäß die Transceiver in den Netzknoten am Kernnetzrand 5 eingesetzt werden sind sie unabhängig vom quasi passiven Kernnetz, so dass weitere Technologieinnovationen, z.B. erhöhte Spektrale Effizienz für Multi-Level Modulationsformate und/oder Erhöhung der Übertragungsreichweiten unmittelbar und unabhängig eingesetzt werden können. Mit dieser Erfindung können die Netze damit einfach und kosteneffektiv sowie zukunftssicher weiter in ihrer Kapazität skalieren, ohne dass das OTN Kernnetz verändert oder angefasst werden muss.

**Unabhängigkeit von OTN Kernnetz und Randknoten Funktionalitäten**

Durch die bevorzugte Unabhängigkeit des festen quasi passiven Kernnetzes 1 von den flexiblen Funktionalitäten in den Netzknoten am Kernnetzrand 5 kann eine modulare Netzstruktur bzw. Netzarchitektur aufgebaut werden. Dadurch werden Funktionalitäten getrennt wodurch Hersteller spezifische Komponenten kosteneffektiv beschafft, eingesetzt, betrieben und gemanaged werden können, so dass sich die Capex und Opex Aufwände reduzieren.

**Unabhängigkeit der optischen AWG Frequenzkanäle**

Durch die bevorzugte Unabhängigkeit der transparenten optischen AWG Frequenzkanäle 7 im vollvermaschten Netz mit Zuweisung bzw. Adressierung der optischen AWG Frequenzkanäle 7 bzw. der optischen DWDM Kanäle, die die Route durch das Kernnetz 1, bzw. den Zielknoten N im Kernnetz bestimmt, ergeben sich weitere viele Vorteile, z.B. die Modularisierung, die unabhängige Nutzung von verschiedenen Technologien unterschiedlicher Hersteller, unabhängige Skalierung der einzelnen Ende-zu-Ende optischen AWG Frequenzkanäle 7 bzw. DWDM Kanäle im vollvermaschten Netz 1, unabhängiges individuelles Monitoring der einzelnen Ende-zu-Ende Verbindungen im vollvermaschten Netz 1, schnelle und genaue Fehlererkennung der einzelnen Ende-zu-Ende DWDM Kanäle und der optischen AWG Frequenzkanäle 7 im vollvermaschten Netz 1, unabhängige Ersatzschaltungen der einzelnen Ende-zu-Ende DWDM Kanäle und der optischen AWG Frequenzkanäle 7 im vollvermaschten Netz 1, individuelle, unabhängige und bedarfsgerechte Skalierung und Ausbau jedes einzelnen Ende-zu-Ende DWDM Kanals und der optischen AWG Frequenzkanäle 7 im vollvermaschten Netz 1, usw.

**Keine weiteren Funktionalitäten im Kernnetz**

Durch die hier beschriebene Erfindung können komplexe, flexible und/oder aktive Netzkomponenten im erfindungsgemäßen OTN-Kernnetz aufgrund der Vollvermaschung der transparenten optischen Ende-zu-Ende Verbindungen entfallen, z.B. optische Add/Drop Multiplexer (siehe US 2002/0141453 A1 und US 7,184,666 B1), rekonfigurierbare flexible optische Add/Drop Multiplexer (ROADM) (siehe US 7,184,666 B1), optische flexible Cross-Connectoren (OXC), optical switch (siehe WO 02/075403 A1), flexible Wellenlängen selektive Switche (WSS), flexible optische Filter, Transitknoten (siehe US 2002/0186432 A1) mit flexiblen Funktionalitäten, Transit IP Router, Label Switched Router, Transit Switche, Transit MPLS Switche oder Router, usw.

**Reduzierung der Kosten pro Gbit/s für die Kernnetz Infrastruktur**

Da vorzugsweise keine weiteren Komponenten außer Standard Singlemode Fasern (SSMF) und optische In-Line Amplifier (OLAs) im Kernnetz eingesetzt werden sind die Anzahl der Komponenten und damit auch die Infrastrukturkosten für den Aufbau (Capex) und den Betrieb (Opex) des Kernnetzes minimiert, so dass die Kosten pro GBit/s nachhaltig reduziert werden.

**Netzsicherheit**

Die Netzsicherheit (Resilience) ist durch den redundanten und disjunkten Aufbau eines zweiten Teilnetzes, wie beispielsweise in Figur 8 dargestellt, oder auch weiteren Teilnetze, wie für ein drittes Teilnetz in Figur 9 dargestellt, mit dem dieser Erfindung zugrunde liegenden Verfahrens möglich und sinnvoll, wobei die redundanten Sternpunkte an beliebigen Stellen in der Netztopologie platziert werden können, insbesondere z.B. an strategisch sinnvollen Punkten in unterschiedlichen Netzknoten, so dass z.B. die Latenzzeit der Übertragungssignale in den Arbeitspfaden minimiert werden kann. Durch den Aufbau weiterer Teilnetze können z.B. auch gleichzeitig auftretende Mehrfachfehler entgegengewirkt werden.

## Arbeitspfade und Ersatzschaltepfade

Die freie und unabhängige Zuordnung der Ende-zu-Ende Arbeitspfade für jede Knotenverbindung im vollvermascheten Netz kann z.B. aufgrund der geringsten Länge, und damit der kürzesten Latenzlaufzeit der Übertragungssignale, gewählt werden, um die Latenzzeit der Arbeitspfade zu minimieren. Ende-zu-Ende Ersatzschaltungspfade, wie sie beispielsweise durch redundante und disjunkte Teilnezte bereit gestellt werden können (siehe beispielsweise Fig. 8 und 9) könnten höhere Längen und Latenzzeiten gegenüber den Arbeitspfaden aufweisen. Durch die Unabhängigkeit der verschiedenen redundanten Sternnetze sowie aller vollvermaschten Ende-zu-Ende AWG Frequenzkanäle können vorzugsweise alle Verbindungen einzeln durch die Zuweisung entsprechender optischer Frequenzen unabhängig voneinander gemanaged werden, insbesondere auch Ersatzschaltungen im Fehlerfall.

## AWG Redundanz

Neben dem Aufbau weiterer Teilnetze mit entsprechenden AWGs in weiteren Sternpunkten können erfindungsgemäß die AWGs auch separat geschützt werden, indem ein weiteres AWG parallel zu dem zu schützenden AWG angeordnet wird. Die ankommenden optischen Signale auf den N eingehenden Glasfasern werden z.B. über N breitbandige optische 3 dB Splitter auf zwei Glasfasern aufgeteilt und den zwei AWGs gleichzeitig zugeführt. Die abgehenden optischen Signale auf den N ausgehenden Glasfasern der AWGs werden z.B. über N breitbandige optische 3 dB Koppler mit z.B. jeweils N optischen Faserschalter für ein AWG, d.h. $2 \times N$ optischen Faserschaltern vor der Zusammenführung, wieder zusammengeführt und auf die Ausgangsfasern zu den einzelnen Netzknoten geschaltet. Dabei werden aber nur Signale eines der beiden AWGs auf die Ausgangsfasern geschaltet. Die Zusammenführung kann dabei z.B. auch von N optischen 2 auf 1 Schaltern durchgeführt werden.

Insbesondere können die redundanten AWGs auch an verschiedenen Orten bereitgestellt werden. Tritt ein Fehlerfall für das aktive AWG auf, dann kann sehr schnell innerhalb von Millisekunden auf das redundante AWG umgeschaltet werden.

Liegen mehrere AWGs in redundanten Sternpunkten vor, dann kann jedes AWG durch ein redundantes AWG, wie hier beschrieben, geschützt werden.

## Fehlerszenarien

Tritt ein Fehlerfall im Netz ein, dann kann vorzugsweise durch ein individuelles Monitoren einzelner vorzugsweise aller optischen AWG Frequenzkanäle bzw. den darüber geschalteten DWDM Kanälen sofort und ohne großen Managementaufwand auf die Fehlerursache und den Fehlerort zurückgeschlossen werden.

Im Folgenden werden verschiedene Fehlerszenarien auf der folgenden Grundlage diskutiert: Es liegt ein Netz mit N = 12 Knoten und zwei redundanten physikalischen Sterntopologien mit Vollvermaschung auf der optischen Frequenzebene vor, entsprechend dem Verfahren in dieser Erfindung (siehe beispielsweise Fig. 8). Durch die N = 12 vorliegenden Knoten können maximal 96 / 12 = 8 unabhängige vollvermaschte Netze mit jeweils $12 \times 11 / 2 = 66$ optischen Pfaden mit Bandbreiten von 50 GHz parallel bereitgestellt werden. Damit können maximal $66 \times 8 = 528$ optische Arbeitspfade bereitgestellt werden

Im ersten Teilnetz befindet sich das erste AWG z.B. im Knoten 7 der als erster Sternpunkt fungiert. Im zweiten Teilnetz befindet sich das zweite AWG im Knoten 3 der als zweiter Sternpunkt fungiert. Die Arbeitspfade sind so gewählt, dass sich die geringste Latenzzeit für die Übertragungssignale ergibt, d.h. es sind Arbeitspfade sowohl im ersten Teilnetz als auch im zweiten Teilnetz geschaltet und die Ersatzschaltepfade sind im entsprechenden anderen Teilnetz vorgesehen.

Jeder AWG Frequenzkanal und jeder darüber geschaltete DWDM Kanal wird vorzugsweise separat gemonitored. Folgende Fehlerszenarien und entsprechende Maßnahmen zur Fehlerbehebung können betrachtet werden:

**Fehlerszenario 1:** Das AWG im ersten Teilnetz in Knoten 7 fällt aus wodurch maximal 8x66 ($8 \times 12 \times 11/2 = 8 \times 66 = 528$) optische Arbeitspfade mit entsprechenden AWG Frequenzkanälen über den Sternpunkt in Knoten 7 betroffen sind.

| Fehlerbehebung 1.1: | Ersatzschaltung auf ein redundantes AWG im selben Sternpunkt in Knoten 7, und alles andere bleibt unverändert |
| --- | --- |
| Fehlerbehebung 1.2: | Alle betroffenen optischen Arbeitspfade mit entsprechenden AWG Frequenzkanälen über den Sternpunkt im Knoten 7 werden auf die |

Ersatzpfade über das AWG im redundanten Knoten 3 geschaltet, weitere Aktivitäten, z.B. Schutz von weiteren optischen Signalen die möglicherweise auf DWDM Kanälen über die Ersatzpfade geschaltet waren sind zusätzlich möglich (siehe beispielsweise Fig. 8).

**Fehlerszenario 2:** Netzknoten 7 als Sternpunkt fällt aus wodurch maximal 8x66=528 optische Arbeitspfade mit entsprechenden AWG Frequenzkanälen über den Sternpunkt in Knoten 7 betroffen sind.

| Fehlerbehebung 2: | Alle maximal 8x66=528 betroffenen optischen Arbeitspfade mit entsprechenden AWG Frequenzkanälen über den Sternpunkt im Knoten 7 werden auf die Ersatzpfade über das AWG im redundanten Knoten 3 geschaltet. Weitere Aktivitäten, z.B. Schutz von weiteren optischen Signalen die möglicherweise auf DWDM Kanälen über die Ersatzpfade geschaltet waren sind zusätzlich möglich |
| --- | --- |

**Fehlerszenario 3:** Bidirektionaler Ausfall der Faserpaarverbindung zwischen Knoten 1 und dem Sternpunkt Knoten 7 im ersten Teilnetz, wobei maximal 8x11=88 Arbeitspfade der 8x66=528 AWG Frequenzkanäle des maximal 8-fach vollvermaschten Netzes betroffen sind.

| Fehlerbehebung 3: | Alle betroffenen optischen Arbeitspfade mit den entsprechenden AWG Frequenzkanälen des Knoten 1 werden über die redundante Glasfaserverbindung zwischen Knoten 1 und dem redundanten Stempunkt im Knoten 3 ersatzgeschaltet weitere Aktivitäten, z.B. Schutz von weiteren optischen Signalen die möglicherweise auf DWDM Kanälen über die Ersatzpfade geschaltet waren sind zusätzlich möglich |
| --- | --- |

**Fehlerszenario 4:** Unidirektionaler Ausfall der Faserpaarverbindung zwischen Knoten 1 und dem Sternpunkt Knoten 7 im ersten Teilnetz, wobei maximal 8x11=88 Arbeitspfade der 8x66=528 AWG Frequenzkanäle des maximal 8-fach vollvermaschten Netzes betroffen wären.

| Fehlerbehebung 4: | Es wird verfahren wie bei der Fehlerbehebung 3 |
| --- | --- |

**Fehlerszenario 5:** Gleichzeitiger Ausfall der Faserpaarverbindung zwischen Knoten 1 und dem Sternpunkt Knoten 7 sowie zwischen Knoten 1 und dem Sternpunkt 3, wobei insgesamt 8x11=88 Arbeitspfade der 8x66=528 AWG Frequenzkanäle des maximal 8-fach vollvermaschten Netzes betroffen wären.

| Fehlerbehebung 5: | Der Knoten 1 ist durch die beiden gleichzeitig aufgetreten Fehlerfälle optisch vollständig isoliert. Die Isolierung des Knoten 1 kann nicht durch Ersatzschaltungen repariert werden. Hier hätte nur der Aufbau eines dritten Teilnetzes mit entsprechendem Sternpunkt und AWG eine weitere Ersatzschaltung ermöglicht, wie beispielhaft in Figur 9 dargestellt. |
| --- | --- |

**Fehlerszenario 6:** Ausfall eines DWDM Interfaces (DWDM Kanal #2) im Knoten 2 wodurch nur ein DWDM Kanal unabhängig von allen anderen DWDM Kanälen betroffen ist. Damit liegt eine Störung im Netzknoten 2 am Kernnetzrand vor, die aufgrund der Unabhängigkeit keinen Einfluss auf das Kernnetz hat.

| Fehlerbehebung 6: | Im Kernnetz sind keine Ersatzschaltungen durchzuführen, da alle AWG Frequenzkanäle ungestört arbeiten. Die Fehlerbeseitigung erfolgt nur über die entsprechende Ersatzschaltung für das Signal des fehlerhaften DWDM Interfaces für den Kanal #2 in den entsprechenden Netzknoten, die den fehlerhaften DWDM Kanal terminieren. Insbesondere wird der fehlerhafte DWDM Kanal optisch transparent durch das Kernnetz geroutet und ist damit unabhängig von den anderen DWDM Signalen, so dass keine weitere Beeinflussung vorliegt. |
|---|---|

**Fehlerszenario 7:** Gleichzeitiger Ausfall zweier DWDM Interfaces (DWDM Kanal #2 und DWDM Kanal #3) im Knoten 1 wodurch nur zwei DWDM Kanäle unabhängig von allen anderen DWDM Kanälen betroffen sind. Damit liegen Störungen im Netzknoten 1 am Kernnetzrand vor, die aufgrund der Unabhängigkeit keinen Einfluss auf das Kernnetz haben.

| Fehlerbehebung 7: | Im Kernnetz sind keine Ersatzschaltungen durchzuführen, da alle AWG Frequenzkanäle ungestört arbeiten. Die Fehlerbeseitigung erfolgt nur über entsprechende Ersatzschaltungen für die Signale der fehlerhaften DWDM Interfaces für die DWDM Kanäle #2 und #3, in den entsprechenden Netzknoten, die die fehlerhaften DWDM Kanäle terminieren. Insbesondere werden die fehlerhaften DWDM Kanäle optisch transparent durch das Kernnetz geroutet und sind damit unabhängig von den anderen DWDM Signalen, so dass keine weiteren Beeinflussungen vorliegen. |
|---|---|

**Fehlerszenario 8:** Gleichzeitiger Ausfall eines DWDM Interfaces (DWDM Kanal #2) im Netzknoten 1 und eines DWDM Interfaces (DWDM Kanal #3) im Netzknoten 2 wodurch nur zwei DWDM Kanäle unabhängig von allen anderen DWDM Kanälen betroffen sind. Damit liegen zwei gleichzeitige Störungen in den Netzknoten 1 und Netzknoten 2 am Kernnetzrand vor, die aufgrund der Unabhängigkeit keinen Einfluss auf das Kernnetz haben.

| Fehlerbehebung 8: | Im Kernnetz sind keine Ersatzschaltungen durchzuführen, da alle AWG Frequenzkanäle ungestört arbeiten. Die Fehlerbeseitigung erfolgt nur über entsprechende Ersatzschaltungen für die Signale der fehlerhaften DWDM Interfaces für die DWDM Kanäle #2 und #3, in den entsprechenden Netzknoten, die die fehlerhaften DWDM Kanäle terminieren. Insbesondere werden die fehlerhaften DWDM Kanäle optisch transparent durch das Kernnetz geroutet und sind damit unabhängig von den anderen DWDM Signalen, so dass keine weiteren Beeinflussungen vorliegen. |
|---|---|

**Flache IP Netzstrukturen**

Werden die vollvermaschten, optisch passiv gerouteten transparenten Ende-zu-Ende Pfade für die Verbindung von IP Routern oder Ethernet Switchen in den Netzknoten eingesetzt, liegen für die IP und Ethernet Ebenen 1-Hop Verbindungen und somit eine flache IP bzw. Ethernet Netzstruktur vor. Damit sind keine Transit IP Router oder Ethernet Switches notwendig, so dass die Routing Tabellen der IP Router und Ethernet Switche übersichtlich und begrenzt sind. Zusätzlich werden die IP Router und Ethernet Switche von unnötigen Transit Verkehren über Mehr-Hop Verbindungen entlastet, die nicht mehr benötigt werden.

Durch die Vollvermaschung der IP Router oder Ethernet Switches wird der Aufwand für Routing Algorithmen zur IP Netz-Optimierung verringert, z.B. für routed wavelength assignment RWA Algorithmen, so dass insbesondere aufwendige Berechnungen für größere Netze entfallen. Ebenfalls können aufwendige Verfahren zur Pfadsuche (siehe US 2004/042404 A1) und Wiederherstellungsprozesse für Re-Konfigurationen im Netz (siehe US 2002/0191247 A1) verringert werden oder entfallen.

Insgesamt werden weniger Packet-Komponenten benötigt, so dass der investive Aufwand (Capex) verringert wird. Dadurch werden unter anderem auch der Footprint und Energiebedarf verringert, so dass der operative Aufwand (Opex) reduziert wird.

**Optische Frequenzregelung der Komponenten, AWG, Filter, Laser, Empfänger**

Da im Netzkonzept verschiedene optische Komponenten mit Frequenzabhängigkeiten und Frequenzfunktionalitäten eingesetzt werden, z.B. passives optisches AWG, passive optische Filter, ITU-T DWDM Frequenzkanäle, AWG Frequenzkanäle, optische Transmitter (Laser), optische Empfänger, usw., werden diese vorzugsweise in ihren optischen Frequenzen gemonitored, aufeinander abgestimmt und/oder geregelt. Die Funktionalität der Frequenzregelung ist damit ein bevorzugter, wenn nicht sogar notwendiger Bestandteil aller Frequenzabhängigen Komponenten. Zur Minimierung der Frequenzabhängigkeit über den Temperaturgang können verschiedene Komponenten entsprechend Kompensierte Technologien verwenden, z.B. können insbesondere a-thermische AWGs eingesetzt werden, die eine sehr geringe Frequenzabhängigkeit von der Temperatur aufweisen. Diese Technologien sind Stand der Technik, z.B. bzgl. des Lacatel-Lucent DWDM Systems 1626 LM.

**Einfaches Management und OAM der Netzkomponenten**

Durch den, durch diese Erfindung möglich gewordenen, modularen Netzaufbau mit unabhängigen Komponenten für das Kernnetz und den Knoten am Kernnetzrand wird insbesondere die Anzahl der Komponenten verringert, sowie das Management, insbesondere das Fehler- und das Konfigurations-Management, sowie das "Operation, Administration, and Maintenance" (OAM) der Komponenten wesentlich vereinfacht, gegenüber nichtmodularen Netzen mit abhängigen Funktionalitäten (siehe US 2003/0099014 A1 und US 2011/0135312 A1).

Besonders durch die erfindungsgemäße Vollvermaschung mit transparenten Ende-zu-Ende Pfaden zwischen den einzelnen Netzknoten können alle Pfade unabhängig voneinander überwacht und gemonitored werden. Dabei können verschiedene Aspekte überwacht und gemonitored werden und entsprechende Aktionen abgeleitet werden, die im Folgenden beispielhaft diskutiert werden.

**Proaktives Fault Management:**

Durch die Auswertung der Übertragungssignale, z.B. Forward Error Correction (FEC) kann eine Degradation entsprechender Kanäle detektiert werden, die zu einer Hitless Ersatzschaltung des betroffenen Kanals im Vorfeld eines Fehlers führt, so dass der Verkehr nicht unterbrochen wird und die defekten Komponenten ausgetauscht werden können.

**Fault Management im Fehlerfall:**

Im Fehlerfall kann das Fault-Management direkt die betroffenen Pfade und die Art und den Ort des Fehlers feststellen und gezielte Aktionen einleiten, z.B. die Umschaltung auf Ersatzkanäle. Das ist insbesondere durch die Unabhängigkeit aller transparenten Pfade im Netz möglich.

**Überwachung der Verkehrslast der Pfade und Netzausbau:**

Insbesondere kann auch die Verkehrslast aller individuellen transparenten Ende-zu-Ende Pfade zwischen den Netzknoten überwacht und gemonitored werden. Dadurch kann der Füllgrad jeder Knoten Verbindung individuell festgestellt werden und bei Überschreitung eines Grenzwertes kann jede Verbindung individuell in der Kapazität erhöht werden.

Das kann z.B. durch den Einsatz eines Interfacepaares mit höherer Spektraler Effizienz erfolgen, um über dieselbe Übertragungsbandbreite von z.B. 50 GHz eine Übertragungskapazität von z.B. 100 GBit/s mit der Spektralen Effizienz von SE=2Bit/s/Hz auf eine Übertragungskapazität von z.B 200 GBit/s mit der Spektralen Effizienz von SE=4Bit/s/Hz zu erhöhen. Insbesondere ist es vorteilhaft, wenn dazu nur die beiden Transceiver in den Netzknoten am Kernnetzrand getauscht werden, und das Kernnetz unberührt bleibt, d.h. es sind vorzugsweise keine weiteren Aktionen erforderlich, da sich die Plug&Play Transceiver vorzugsweise selber einmessen.

Eine andere Möglichkeit besteht darin, eine noch freie transparente Bandbreite für die entsprechende Knoten-zu-Knoten Pfade mit zusätzlichen Interfaces auszurüsten. Wird z.B. von der vorhandenen Bandbreite des transparenten AWG Frequenzkanals von z.B. 400 GHz nur eine Bandbreite von z.B. 50 GHz für einen ITU-T DWDM Frequenzkanal genutzt, wobei Transceiver mit einer Übertragungskapazität von z.B. 100 GBit/s mit der Spektralen Effizienz von SE=2Bit/s/Hz eingesetzt sind, dann kann durch die Nutzung der freien Bandbreite durch z.B. eines weiteren 50 GHz ITU-T DWDM Frequenzkanals ein weiterer transparenter Pfad aufgebaut werden. Mit den 2 Transceivern für einen zusätzlichen Pfad mit einer Übertragungskapazität von z.B. 100 GBit/s mit der Spektralen Effizienz von SE=2Bit/s/Hz würde die ursprüngliche Kapazität von 100GBit/s auf 200 GBit/s verdoppelt werden. Insgesamt würden dabei von den vorhandenen 400 GHz Bandbreite (bei einem N = 12 Knotennetz) des AWG Frequenzkanals nur 100 GHz belegt werden, so dass weitere Kapazitätserhöhungen möglich sind. Außerdem ist die Infrastruktur des Kernnetzes von dieser Maßnahme unabhängig und nicht betroffen.

Zusätzlich werden durch die vereinfachten Netzstrukturen die Managementfunktionalitäten die Capex und Opex Aufwände reduziert wodurch sich kostengünstige Netze ergeben.

**Netzausbau, Netzskalierung und Netzoptimierung**

Durch die Modularisierung ist ein von der Kernnetz Infrastruktur unabhängiger Netzausbau und eine Skalierung der Knoten-zu-Knoten Kapazitäten und Netzkapazitäten möglich. Insbesondere ist ein bedarfsgerechter Ausbau für die benötigten zusätzlichen Kapazitäten für jeden der Knoten-zu-Knoten Pfade unabhängig voneinander möglich. Werden dabei Transceiver mit z.B. geringerer Spektraler Effizienz durch höhere ausgetauscht, dann können die ausgetauschten Transceiver an anderer Stelle im Netz unabhängig wiederverwendet werden. Zusätzlich kann neue Technik mit z.B. Transceiver mit erhöhten Spektralen Effizienten unabhängig eingesetzt werden, wodurch die Erfindung die Investitionen schützt und die Zukunftssicherheit der Netze unterstützt.

Die Erfindung unterstützt somit die Strategien "Pay as you grow", "Grow was you need" und die "Multi-Vendor Strategie". Dabei können aufgrund der transparenten optischen Übertragung und der Unabhängigkeit der Komponenten verschiedene Technologien verschiedener Hersteller eingesetzt werden, so dass der Wettbewerb verstärkt wird und sich kosteneffektivere Netze ergeben. Dabei können durch die Modularisierung auch verschiedene Hersteller für verschiedene Komponenten genutzt werden, z.B. für optische Filter und DWDM Komponenten, WSS, DWDM Transceiver, usw.

Durch die hier beschriebene Erfindung ist auch eine Netzoptimierung inhärent berücksichtigt, wobei aufgrund von Messungen nur dort Pfadkapazitäten ausgebaut werden, wo sie auch benötigt werden. Dadurch wird die Bereitstellung unnötiger Netzressourcen verhindert.

## ZUSAMMENFASSUNG DER ERFINDUNG

Die Erfindung betrifft generell ein Verfahren für den Aufbau, das Betreiben und Skalierung eines modularen optisch gerouteten Datennetzes bzw. Transportnetz mit den Schritten: Bereitstellen eines quasi passiven und vorzugsweise festen OTN-Kernnetzes mit N Netzknoten am Kernnetzrand; Bereitstellen mindestens einer aktiven Komponente in jedem Netzknoten für die Übertragung von Daten über das Kernnetz, dadurch gekennzeichnet dass Ändern, zur Skalierung des Netzes, mindestens einer der mindestens einen aktiven Komponente in mindestens einem Netzknoten verändert wird, wohingegen das quasi passiven OTN-Kernnetzes im Wesentlichen unveränderter bleibt. Mit anderen Worten, für eine Änderung bzw. Skalierung des Transportnetzes wird das quasi passive OTN-Kernnetz im Wesentlichen unverändert beibehalten und lediglich Teile der Netzknoten bzw. alle Netzknoten werden an die Änderung angepasst.

Vorzugsweise ist das Kernnetz als Sternnetz ausgebildet und weiter bevorzugt als Sternnetz mit mindestens einem Sternpunkt ausgebildet, wobei sich ein Sternpunkt vorzugsweise in einem Netzknoten am Kernnetzrand befindet und/oder ein Sternpunkt sich außerhalb der Netzknoten befindet.

Vorzugsweise wird eine Vollvermaschung zwischen den Netzknoten hergestellt. Das Kernnetz kann zusätzlich mindestens eine Komponente der folgenden Liste aufweisen: Glasfasern wie Standard Singlemode Fasern, SSMF, optische In-Line Amplifier, OLAs, und mindestens ein AWG, Arrayed-Waveguide Grating.

Vorzugsweise ist das AWG im Sternpunkt installiert und vorzugsweise ein optisch passives NxN AWG, beispielsweise ein thermisches bzw. ein a-thermisches AWG.

Gemäß einer weiteren bevorzugten Ausführungsform wird das AWG als verlustarmes NxN AWG mit einer AWG Frequenzkanal Bandbreite eingesetzt. Vorzugsweise werden optische AWG Frequenzkanäle auf N verschiedenen Eingangsfrequenzen und N verschiedenen Eingangsfasern bzw. Eingangsports auf N verschiedenen Ausgangsfasern bzw. Ausgangsports unter Beibehaltung der optischen Frequenzen optisch passiv geroutet.

Das AWG kann auch als verlustarmer $N \times 1$ Multiplexer und $1 \times N$ Demultiplexer in DWDM, Dense Wavelength Division Multiplex, Systemen eingesetzt werden, wobei vorzugsweise optische NxN AWG Frequenzkanäle auf N verschiedenen optischen Eingangsfrequenzen und N verschiedenen Eingangsglasfasern bzw. Eingangsports auf eine Ausgangsfaser bzw. einen Ausgangsport unter Beibehaltung der optischen Frequenzen, optisch passiv geroutet werden.

Anstelle des 1xN AWGs bzw. Nx1 AWGs können auch andere Filterelemente für die Multiplexer bzw. Demultiplexer Funktionalitäten für die NxN AWG Frequenzkanäle eingesetzt werden.

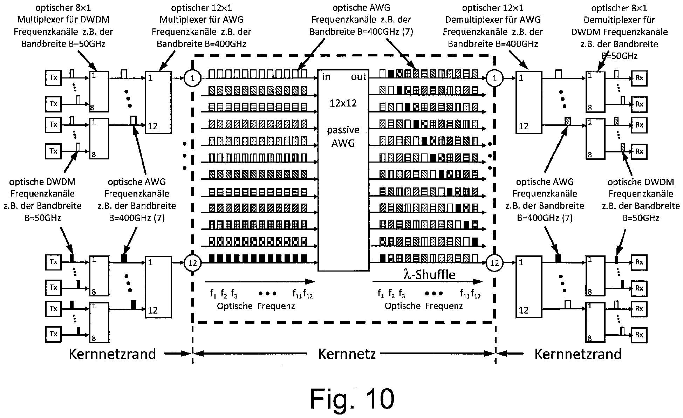

Das AWG wird vorzugsweise als verlustarmer $M \times 1$ Multiplexer und $1 \times M$ Demultiplexer in DWDM, Dense Wavelength Division Multiplex, Systemen eingesetzt, wobei vorzugsweise optische DWDM Frequenzkanäle auf M verschiedenen optischen Eingangsfrequenzen und M verschiedenen Eingangsglasfasern bzw. Eingangsports auf eine Ausgangsfaser unter Beibehaltung der optischen Frequenzen, optisch passiv geroutet werden. Die Multiplexer und/oder Demultiplexer können auch kaskadiert angeordnet werden, wie beispielsweise in Fig. 10 dargestellt.

Anstelle des 1xM AWGs bzw. Mx1 AWGs können auch andere Filterelemente für die Multiplexer bzw. Demultiplexer Funktionalitäten für die DWDM Frequenzkanäle eingesetzt werden.

Erfindungsgemäß werden optischen Pfade zwischen den Netzknoten, vorzugsweise alle optischen Pfade, unabhängig voneinander überwacht und/oder gemonitored und vorzugsweise entsprechende Korrektur-Aktionen eingeleitet wie beispielsweise Proaktives Fault Management, Fault Management im Fehlerfall.

Zu Nennen wäre hier auch der Black-Link Ansatz ITU-T G.698.2 Recommendation (siehe auch ITU-T G.698.1, G698.2 und G698.3). Der Black Link wäre dem Kernnetz zuzuordnen, wobei sich die optisch transparente Strecke aufgrund von Pilot Signalen selber einregelt, z.B. auch bei dem Alcatel-Lucent 1626LM System. Davon unabhängig sind dann die Plug& Play Transceiver, die in den Netzknoten an die transparenten "Black Links" angeschaltet werden können.

Erfindungsgemäß kann auf eine nachträgliche Veränderung bzw. Hinzufügung zusätzlicher flexibler und/oder aktiver Netzkomponenten im Kernnetz aufgrund der Vollvermaschung der (transparenten) optischen Ende-zu-Ende Verbindungen verzichtet werden.

Das Kernnetz kann durch ein zweites, redundantes, vorzugsweise vollvermaschtes Teilkernnetz erweitert werden. Zudem können unabhängige bzw. redundante AWGs bereitgestellt werden, auf die umgeschaltet werden kann.

Gemäß einem weiteren Aspekt können passive und/oder aktive optische und/oder elektrische Komponenten in den Netzknoten bereitgestellt werden, vorzugsweise optische Filter, optische Schalter, Switche, Router und weitere IP-Packet verarbeitende Komponenten.

Die vorliegende Erfindung betrifft auch ein Netzwerksystem, das gemäß den oben genannten bzw. den unten diskutierten bzw. beanspruchen Grundsätzen aufgebaut ist. Vorzugsweise ist das erfindungsgemäße Netzwerksystem modular aufgebaut und weist auf: ein quasi passives und vorzugsweise festes OTN-Kernnetz mit N Netzknoten am Kernnetzrand; mindestens einen Transceiver in jedem Netzknoten, dadurch gekennzeichnet, dass das Netzwerksystem einfach skalierbar ist und Änderungen zur Skalierung des Netzes bereits ermöglicht werden, indem Komponenten in den Netzknoten verändert, nachgerüstet und/oder ausgetauscht werden, unter im Wesentlichen unveränderter Beibehaltung des quasi passiven OTN-Kernnetzes.

Das Kernnetz ist vorzugsweise als Sternnetz mit mindestens einem Sternpunkt ausgebildet, wobei sich ein Sternpunkt in einem Netzknoten am Kernnetzrand befindet und/oder ein Sternpunkt außerhalb der Netzknoten befindet.

Das Kernnetz umfasst mindestens eine der folgenden passiven optischen Komponenten: Glasfasern wie Standard Singlemode Fasern, SSMF, optische In-Line Amplifier, OLAs, und mindestens ein AWG, Arrayed-Waveguide Grating.

Vorzugsweise ist das AWG im Sternpunkt installiert und vorzugsweise ein optisch passives NxN AWG, beispielsweise ein a-thermisches AWG.

Das AWG kann zudem beispielsweise ein verlustarmes NxN AWG mit einer AWG Frequenzkanal Bandbreite sein, wobei vorzugsweise optische AWG Frequenzkanäle auf N verschiedenen Eingangsfrequenzen und N verschiedenen Eingangsfasern bzw. Eingangsports auf N verschiedenen Ausgangsfasern bzw. Ausgangsports unter Beibehaltung der optischen Frequenzen, optisch passiv geroutet werden.

Die Netzknoten können passive und/oder aktive optische und/oder elektrische Komponenten aufweisen, vorzugsweise optische Filter, optische Schalter, Switche, Router und weitere IP-Packet verarbeitende Komponenten.


## KURZE BESCHREIBUNG DER ZEICHNUNGEN

Im Folgenden werden bevorzugte Ausführungsformen der vorliegenden Erfindung unter Bezugnahme auf die Figuren ausführlich beschrieben. Es zeigen:

Fig. 1          einen Teil eines Netzwerks mit einem Kernnetz und Netzknoten am Kernnetzrand;

Fig. 2          ein Sternnetz mit einem Sternpunkt S in einem der N Netzknoten;

Fig. 3          ein Sternnetz mit einem Sternpunkt S außerhalb der der N;

Fig. 4 und 5    passive optische Komponente eines N × N Port zyklischen AWGs;

Fig. 6          die Zusammenhänge der Funktionalitäten eines zyklischen AWGs ;

Fig. 6a         die Basisband Zusammenhänge der Funktionalitäten eines AWGs ;

Fig. 7          den Zusammenhang zwischen den DWDM Link Kapazität in Terabit/s in Abhängigkeit von der DWDM Kanal-Übertragungsrate und dem Kanalfrequenzraster;

Fig. 8          ein Sternnetz mit zwei redundanten Sternpunkten S1 und S2;

Fig. 9          ein Sternnetz mit drei redundanten Sternpunkten S1, S2 und S3;

Fig. 10-13      Beispiel Szenarien für die Erfindung für den Einsatz passiver Komponenten am Kernnetzrand; und

Fig. 14         ähnlich wie Fig. 1 einen Teil eines Netzwerks mit einem Kernnetz und Netzknoten am Kernnetzrand.

Fig. 15         Beispiel Szenarium für die Erfindung für den Einsatz eines aktiven WSS parallel zum NxN AWG am Netzrand in einem Netzknoten

Fig. 16         Beispiel Szenarium für die Erfindung für den Einsatz passiver Komponenten in einem optischen Verbindungsnetz eines Daten-Centers.


## DETAILLIERTE BESCHREIBUNG BEVORZUGTER AUSFÜHRUNGSFORMEN

Figur 1 zeigt eine erste schematische Darstellung einer erfindungsgemäßen Modularisierung in ein Kernnetz und Netzknoten. Beispielsweise sind physikalisch optisch transparente Verbindung 4 zwischen einem Netzknoten N und dem Sternpunkt S am Kernnetzrand 5 über ein OTN Kernnetz 1 dargestellt, wobei das Kernnetz nur Standard Singlemode Glasfasern (SSMF) 2 und optische Verstärker (OLAs) 3 enthält. Insbesondere sind keine Linkkompensationen für Chromatische Dispersion, Mean Group Delay, Polarisationsmodendispersion, oder sonstiges Link-Dispersionsmanagement notwendig und vorgesehen.

Insbesondere werden im Kernnetz keine variablen Komponenten benötigt, sondern das quasi passive optisch transparente Kernnetz besteht im Wesentlichen nur aus den Glasfasern und entsprechenden "Optischen Line Amplifiers" (OLAs) im Abstand von z.B. ca. 100 km Span-Länge. Damit können hochbitratige >100Gbit/s optisch transparente DWDM Ende-zu-Ende Verbindungskanäle über sehr große Entfernungen >2000 km bereitgestellt werden.

Erfindungsgemäß können alle weiteren Komponenten, die die Funktionalität des optischen Transportnetzes [aktiv] bestimmen, lediglich in den Netzknoten am Rand 5 des Netzes, bereitgestellt werden. So zeigt Fig. 1 beispielsweise im Netzknoten N einen Transmitter Tx und einen Receiver RX, wobei die Kombination dieser beiden Komponenten im Folgenden auch als Transceiver bezeichnet wird.

Figur 2 zeigt ein physikalisches Sternnetz mit z.B. N = 12 Netzknoten N1 bis N12. Der Sternpunkt S befindet sich z.B. im Netzknoten N7. Der Sternpunkt S wird über Glasfaserlinks L1 bis L11, mit mindestens einer, vorzugsweise jeweils 2 Glasfasern, mit allen anderen Netzknoten verbunden.

Figur 3 zeigt ein physikalisches weiteres erfindungsgemäßes Sternnetz mit z.B. N = 12 Netzknoten N1 bis N12. Der Sternpunkt S befindet sich z.B. an einer separaten Stelle im Netz. Der Sternpunkt S wird über Glasfaserlinks L1 bis L12, mit mindestens einer, vorzugsweise jeweils 2 Glasfasern, mit allen Netzknoten N1 bis N12 verbunden.

Figur 4 zeigt ein NxN AWG mit vollständig permutiertem Optischen Frequenz Shuffle 8 auf den AWG Ausgangsports. Insbesondere wird die Permutation durch unterschiedliche Muster graphisch dargestellt. Auf den AWG Ausgangsports bzw. AWG Ausgangsfasern N1o bis N12o liegt eine vollständige Permutation der optischen AWG Eingangsfrequenzkanäle 7 der Eingangsfasern bzw. Eingangsports N1i bis N12i vor. Dabei werden die einzelnen optischen AWG Frequenzkanäle 7 der Bandbreite vorzugsweise rein passiv durch das AWG geroutet.

Figur 5 zeigt ein NxN AWG mit vollständig permutiertem Optischen Frequenz Shuffle 8 auf den AWG Ausgangsports und AWG Frequenzkanalbezeichnung, entsprechend Bild 4 für z.B. N=12.

Figur 6 zeigt die Funktionalität und zyklisches Frequenzverhalten eines AWG. Der Freie Spektralbereich 9 FSR definiert den Frequenzzyklus des AWGs, d.h. die zyklischen Bänder 9 der Ordnung 0, 1, 2, ... z.B. eines $4 \times 4$ Port AWG mit 200 GHz Bandbreite des optischen AWG Kanals 7 und einem FSR = 800 GHz 9.

Figur 6a zeigt die Basisband Funktionalität eines AWG am Beispiel eines 12x12 AWGs mit 400 GHz Bandbreite der AWG Frequenzkanäle 7 und 50 GHz Bandbreite der DWDM Frequenzkanäle.

Figur 7 zeigt eine DWDM Link Kapazität in Terabit/s für unterschiedliche Übertragungsraten von 10Gbit/s, 40Gbit/s, 100Gbit/s und 200Gbit/s pro DWDM Kanal und für unterschiedliche Kanalfrequenzraster (Frequenz Grid) von 50GHz, 25GHz, 12,5GHz und 6,25GHz entsprechend dem ITU-T G.694.1 Standard. Die unterschiedlichen Übertragungsraten sind durch unterschiedliche Strichelungen bzw. Strichpunktierungen dargestellt.

Figur 8 zeigt zweifach geschütztes physikalisches Sternnetz mit z.B. N = 12 Netzknoten N1 bis N12. Der erste Sternpunkt S1 befindet sich z.B. im Netzknoten N7. Der zweite Sternpunkt S2 befindet sich z.B. im Netzknoten N3. Es können zwei disjunkte (getrennte) Sternnetze zum gegenseitigen Schutz aufgebaut werden. Die Sternpunkte S für die Arbeitspfade können nach der geringsten Pfadlänge zwischen 2 Knoten unabhängig ausgewählt werden. Für die Ersatzpfade ergibt sich der jeweils andere Sternpunkt.

Figur 9 zeigt dreifach geschütztes physikalisches Sternnetz mit z.B. N = 12 Netzknoten N1 bis N12. Die Sternpunkte S1, S2 und S3 befinden sich z.B. im Netzknoten N7, N3, und N11. Es können drei disjunkte Sternnetze zum gegenseitigen Schutz aufgebaut werden, wobei das Netz auch für gleichzeitig auftretende Fehler geschützt ist. Die Sternpunkte für die Arbeitspfade und Ersatzpfade können nach den geringsten Pfadlängen zwischen 2 Knoten unabhängig ausgewählt werden, wobei die Länge der Arbeitspfade kleiner als die Länge der Ersatzpfade sein sollte.

Figur 10 zeigt ein Beispiel für ein 12 Knoten Kernnetz mit passiven 12x12 AWG und AWG Frequenzkanälen der Bandbreite B=400GHz und passiven optischen 12x1 De/Multiplexer/Filter am Kernnetzrand zur Separierung der AWG Frequenzkanäle mit Bandbreiten B=400GHz und passiven optischen 8x1 De/Multiplexer/Filter am Kernnetzrand zur Separierung der DWDM Frequenzkanäle mit Bandbreiten B=50GHz. 1 AWG Frequenzkanal mit B=400GHz trägt bis zu 8 DWDM Kanäle mit B=50GHz. Zudem zeigt die Figur 10 schematisch die Bereitstellung von Management Funktionalitäten für die optischen passiven Komponenten (z.B. Regelung der optischen Frequenzen) und der adaptiven Transceiver (Konfiguration der optischen Frequenz für die Wahl des Zielknotens).

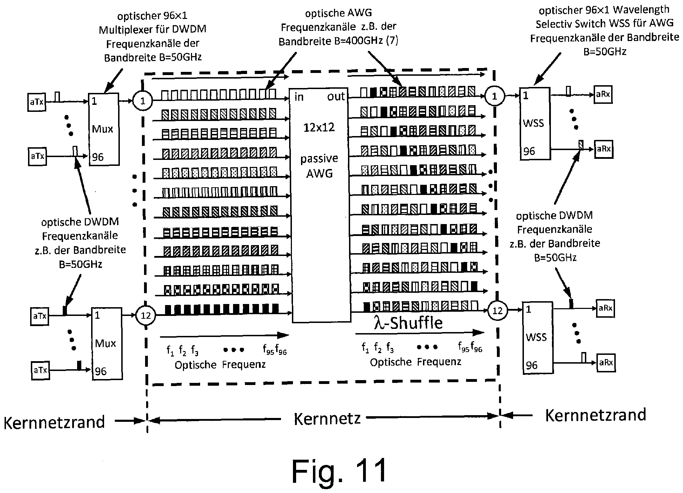

Figur 11 zeigt ein Beispiel für ein 12 Knoten Kernnetz mit passiven 12x12 AWG und AWG Frequenzkanälen der Bandbreite B=400GHz und am Kernnetzrand mit sendeseitigen adaptiven Sendern (aTX) und 96:1 Multiplexern und empfangsseitig mit unabhängigen optischen 96x96 Wellenlängen Selektiven Switchen (WSS) mit fester Bandbreite B=50GHz sowie flexiblen adaptiven Empfängern (aRx). Mit den adaptiven und abgestimmten Sendern und Empfängern können wahlfreie Übertragungsraten zwischen 10Gb/s bis 350GB/s mit entsprechenden Spektralen Effizienten von 0,2Bit/s/Hz bis 7Bit/s/Hz durchgeführt werden. Zudem zeigt die Figur 11 schematisch die Bereitstellung von Management Funktionalitäten für die optischen passiven Komponenten (z.B. Regelung der optischen Frequenzen), der WSS und der adaptiven Transceiver (Konfiguration der optischen Frequenz und der WSS Ports).

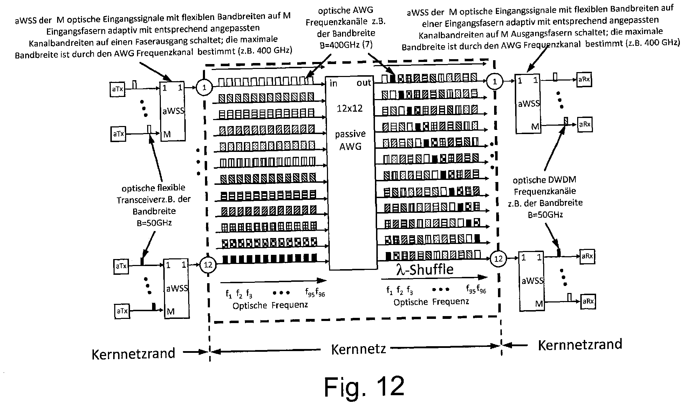

Figur 12 zeigt ein Beispiel für ein 12 Knoten Kernnetz mit passiven 12x12 AWG und AWG Frequenzkanälen der Bandbreite B=400GHz und am Kernnetzrand mit sendeseitigen adaptiven Sendern (aTX) und M:1 adaptiven aWSS und empfangsseitig mit adaptiven Empfängern (aRx) und 1:M aWSS; die sende- bzw. empfangsseitigen adaptiven WSS können M verschiedene optische Signale auf den M Ein- bzw. Ausgangsfasern mit unterschiedlichen adaptiven Bandbreiten zusammenführen M:1 bzw. aufspalten 1:M. Die Bandbreite der aWSS Kanäle werden dabei auf die Bandbreiten der adaptiven optischen Sender und Empfänger für die benötigten Übertragungsbandbreiten eingestellt. Zudem zeigt die Figur 12 schematisch die Bereitstellung von Management Funktionalitäten für die optischen passiven Komponenten (z.B. Regelung der optischen Frequenzen), der WSS und der adaptiven Transceiver (Konfiguration der optischen Frequenz und WSS-Kanalbandbreite und WSS-Ports).

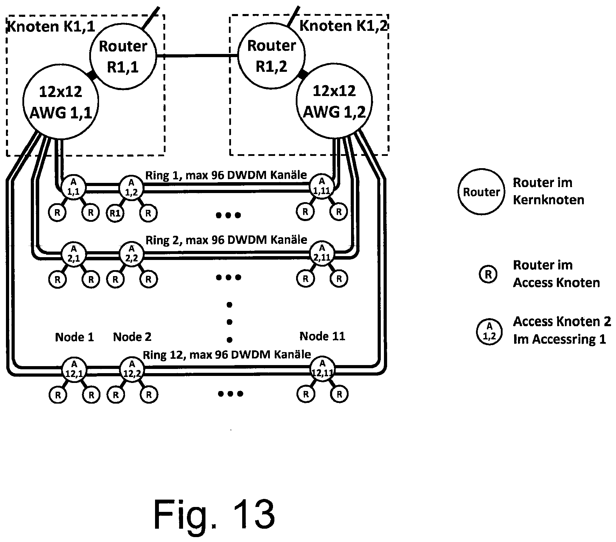

Figur 13 zeigt ein Beispiel für den Einsatz von NxN AWGs in zwei redundante Kernnetzknoten K1,1 und K1,2 für die redundante Erschließung von Regio-, Metro-, oder Access Bereichen über Ringstrukturen. Über zwei redundante 12×12 AWGs in den 2 Netzknoten werden 2 je Router R1,1 und R1,2 mit den Routern R in den Access Knoten Ax,y verbunden, wobei y dem jeweiligen Access Knoten im Ring x entspricht. Der 12te Knoten in den Access Ringen ist z.B. der jeweils andere Kernnetzknoten. Insgesamt stehen pro Faser 12 AWG Frequenzkanäle mit 400 GHz AWG Frequenzbandbreite zur Verfügung, die z.B. durch je 8x50 GHz DWDM Kanäle genutzt werden können. Diese Struktur kann 2 redundanten Kernnetzknoten mit insgesamt 12×11= 132 Access Knoten über 12 redundante Ringe mit jeweils 11 Knoten pro Ring verbinden.

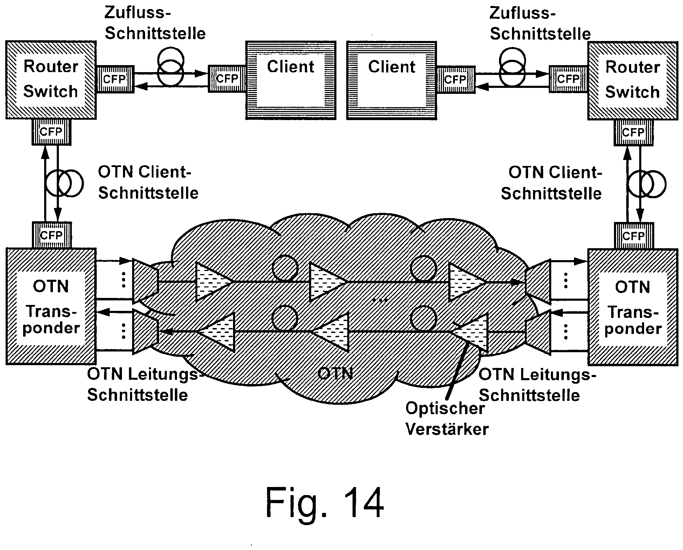

Figur 14 zeigt einen Teil eines Netzwerks mit einem Kernnetz und Netzknoten am Kernnetzrand.

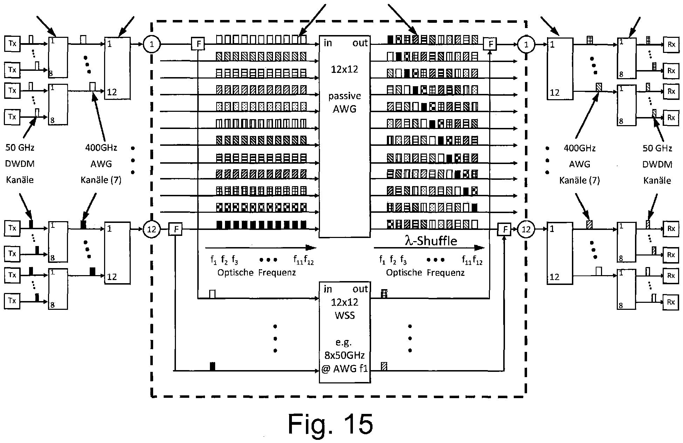

Figur 15 zeigt den Einsatz eines aktiven WSS parallel zum NxN AWG am Netzrand in einem Netzknoten wodurch zusätzliche Kapazitäten durch den WSS geschaltet werden können. Die Funktionalität des WSS ist dabei von der Funktionalität des NxN AWG entkoppelt und damit auch unabhängig.

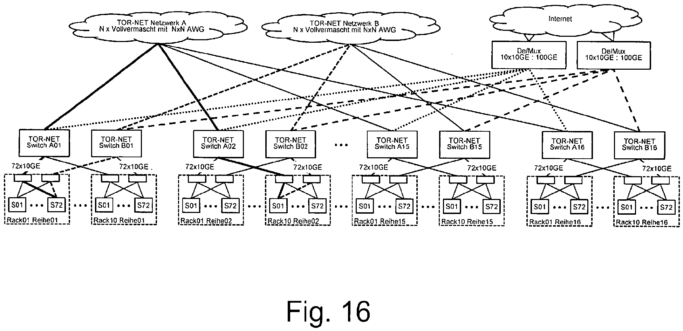

Figur 16 zeigt den Einsatz der Erfindung in einem Data Center. Durch die Anwendung der Erfindung wird in einem Data Center z.B. eine Tier 3 Fat Tree Architektur auf eine Tier 1 vollvermaschte transparente optische Architektur für ein optisches Verbindungsnetz reduziert, wobei die"TOR-NET" Switche über die Teilnetze A und B entsprechend der vorliegenden Erfindung verschaltet werden.

Schließlich wird noch auf die nachfolgenden Tabellen 1 bis 5 verwiesen die folgendes darstellen:

**Tabelle 1:** Anzahl der Duplex AWG Frequenzkanäle und Bandbreite zwischen 2 Knoten, die in einem vollvermaschten Netz durch ein NxN AWG bereitgestellt werden, für einen AWG Freien Spektralbereich FSR = 4,8 THz (erweitertes C-Band) in Abhängigkeit von der Anzahl N der Netzknoten bzw. NxN AWG Ports.

**Tabelle 2:** Knoten-zu-Knoten Kapazitäten in Abhängigkeit von der Knoten-zu-Knoten Bandbreite (entspricht der AWG Frequenzkanal Bandbreite) und der Spektralen Effizienz (SE) der Sender und Empfänger in den Transceivern.

**Tabelle 3:** Anzahl der Duplex AWG Frequenzkanäle sowie die Netzbandbreite, die in einem vollvermaschten Netz durch ein NxN AWG bereitgestellt werden, für einen AWG Freien Spektralbereich FSR = 4,8 THz (erweitertes C-Band) in Abhängigkeit von der Anzahl N der Netzknoten bzw. NxN AWG Ports.

**Tabelle 4:** Anzahl der Duplex AWG Frequenzkanäle sowie die Netzbandbreite, die in einem vollvermaschten Netz durch ein NxN AWG bereitgestellt werden, für einen AWG Freien Spektralbereich FSR = 4,8 THz (erweitertes C-Band) in Abhängigkeit von der Anzahl N der Netzknoten bzw. NxN AWG Ports.

**Tabelle 5:** Grobe techno-ökonomische Betrachtung des Beispiels Netzszenario 1.

Im Folgenden werden die Beispiele der Netzszenarien 1 bis 6 der Figuren 10 bis 13 und 15 bis 16 nochmals detaillierter beschrieben.

**Beispiel Netzszenario 1 für den Einsatz passiver Komponenten am Kernnetzrand**

Ein Beispiel Szenario für die Erfindung für den Einsatz passiver Komponenten am Kernnetzrand ist in Figur 10 dargestellt. Im Kernnetz mit 12 Knoten am Kernnetzrand befindet sich nur das passive 12x12 Port AWG mit einer Bandbreite von 400 GHz für die transparenten optisch gerouteten AWG Frequenzkanälen 7, sowie die Glasfaser Trunks inklusive OLAs (Optical Line Amplifiers), die das AWG mit den einzelnen Knoten verbindet.

Pro Knoten ist eine duplex Glasfaserverbindung für die ankommenden und abgehenden optischen Signale notwendig. Auf jeder Sende- bzw. Empfangs-Seite der Knoten befinden sich zwei optische Filterstufen. Die erste besteht aus passiven 12:1 Multiplexern bzw. 1:12 DeMultiplexern mit einer Kanalbandbreite von 400 GHz, entsprechend der AWG Frequenzkanal Bandbreite, um diese 400 GHz Frequenzbänder zusammenzuführen bzw. zu trennen. Für beide Seiten liegt dabei dieselbe 1:12 Mux/Demux Funktionalität vor, so dass insgesamt 2x12=24 Stück dieser 1:12 Mux/Demux Komponenten für eine voll aufgebaute optische Infrastruktur notwendig sind. In einer zweiten Filterstufe können die auf 12 Fasern vorliegenden 400 GHz Bandbreiten in jeweils 8 weitere DWDM Kanäle mit 50 GHz DWDM Bandbreiten unterteilt werden. Dazu sind insgesamt weitere 12x12x2=288 Stück entsprechende 1:8 DWDM Mux/Demux Komponenten mit 50 GHz Kanalbandbreite für eine voll aufgebaute optische Infrastruktur notwendig. Diese DWDM Filterarchitektur ist Stand der Technik und z.B. im 1626 LM System von Alcatel-Lucent verfügbar.

Für den Aufbau eines vollvermaschten Netzes mit 12 Knoten sind insgesamt 12×11/2=66 transparente Pfade notwendig, die durch die Bereitstellung von nur 12 auf den verschiedenen Fasern wiederverwendeten optischen Frequenzen geschaltet werden können. Damit sind für den Grundaufbau eines vollvermaschten Netzes insgesamt 66x2=132 Sender und 132 Empfänger notwendig, die durch 132 Transceiver Module (Sender und Empfänger) mit entsprechend abgestimmten bzw. einstellbaren optischen Frequenzen bereitgestellt werden. Werden 100 GBit/s Transceiver mit der Spektralen Effizienz von 2Bit/s/Hz bereitgestellt, dann ergibt sich eine duplex Knoten-zu-Knoten Kapazität von 100 GBit/s zwischen 2 beliebigen Knoten, und eine duplex Netzkapazität von 66x100 Gbit/s=6,6 TBit/s für den Basisausbau mit 12 genutzten optischen Frequenzen. Werden alle 8x12=96 optischen Frequenzen genutzt, dann können 8 Frequenzebenen unabhängig voneinander aufgebaut werden wodurch sich die duplex Knoten-zu-Knoten Kapazität auf 8x100 GBit/s=0,8 TBit/s und die duplex Netzkapazität auf 8x6,6 TBit/s=52,8 TBit/s, bei einer Spektralen Effizienz von 2Bit/s/Hz, erhöhen. Bei einer weiteren Erhöhung der Spektralen Effizienz ergeben sich entsprechend höhere Kapazitäten, siehe auch Tabellen 1- 4 für verschiedene Werte für die Zahl der Netzknoten, die entsprechende Bandbreite der AWG Frequenzbänder, der entsprechenden Zahl der transparenten Pfade und der Spektralen Effizienten.

Durch die freie Wahl der Parameter können insbesondere auch andere DWDM Frequenz Grids zum Aufbau von Netzen mit reduzierten DWDM Kanalbandbreiten und erhöhten Spektralen Effizienten aufgebaut werden, um die Netzkapazität zu erhöhen.

Für die Komponenten und den Betrieb sind Management Funktionalitäten notwendig (siehe US 2002/0165962 A1), z.B. für die Überwachung und Regelung der optischen Frequenzen für das AWG, die Filter und die Transceiver DWDM Kanalfrequenzen. Diese optischen DWDM Kanalfrequenzen bestimmen den Zielknoten und müssen vom Konfigurationsmanagement bestimmt werden. Die erweiterten Funktionalitäten befinden sich in diesem Beispiel durch die Modularisierung und Unabhängigkeit der Komponenten nur in den Netzknoten am Kernnetzrand, so dass das Kernnetz nicht beeinflusst oder verändert wird.

**Grobe techno-ökonomische Betrachtung des Beispiels Netzszenario 1**

Wird im Beispiel des Netzszenario 1 eine Länge aller 11 Fasern zwischen den einzelnen Knoten und dem zentralen AWG im Knoten 7 entsprechend Figur 2 mit einer Länge von 1000 km angenommen, dann sind dafür pro Faseranbindung 9 bidirektionale optische Inline Amplifier (OLAs) 3 entsprechend Figur 1 notwendig, wenn ein Verstärkerabstand von 100 km angenommen wird. Damit sind für den Aufbau der quasi passiven Faserinfrastruktur insgesamt 99xOLAs für insgesamt 11.000 Faser km notwendig. Mit den in Tabelle 5 angegebenen Werten ergibt sich für den Aufbau der Kernnetz Infrastruktur mit 1x 12×12 AWG 400 GHz, 24x 1:12 Mux/Demux, 288x 1:8 Mux/Demux ein Betrag von ca. 1,6 Mio € ohne Berücksichtigung der Faserkosten.

Für einen Basisausbau eines vollvermaschten Netzes mit 66 transparenten Pfaden werden 12 der 96 im C-Band zur Verfügung stehenden optischen DWDM Frequenzkanälen mit je 50 GHz Bandbreite sowie 132 Transceiver benötigt. Werden dafür 100 GBit/s Transceiver mit einer Spektralen Effizienz von 2Bit/s/Hz genutzt, dann ergibt sich eine Netzkapazität von 6,6 TBit/s. Die Gesamtkosten für den Aufbau dieser Netzkapazität betragen entsprechend Tabelle 5 ca. 8,2 Mio €. Damit ergibt sich ein Netzkostenfaktor für den Basisausbau von ca. 0,113 €/GBit/km, entsprechend Tabelle 5. Bei dem Einsatz von heute real verfügbaren Preisen für die entsprechenden Komponenten hat sich der Netzkostenfaktor gegenüber Tabelle 5 bereits auf ca. 0,067 €/GBit/km, d.h. auf ca. 60% verringert, wobei sich dieser Trend durch den weiteren Preisverfall der Komponenten fortsetzen wird.

Wird ein Vollausbau betrachtet, dann können 8 unabhängige vollvermaschte Teilnetze durch die 8x12=96 zur Verfügung stehenden DWDM Frequenzkanäle im C-Band bereitgestellt werden. Damit kann die Netzkapazität 8-fach auf 8x6,6 TBit/s = 52,8 TBit/s gesteigert werden. Dazu müssen insbesondere nur weitere 924 Transceiver nachgerüstet werden und das Kernnetz bleibt unberührt und wird nicht verändert. Die Gesamtkosten für den Vollausbau ergeben entsprechend Tabelle 5 ca. 54,4 Mio €. Damit ergibt sich ein Netzkostenfaktor für den Vollausbau von ca. 0,094 €/GBit/km entsprechend Tabelle 5. Bei dem Einsatz von heute real verfügbaren Preisen für die entsprechenden Komponenten hat sich der Netzkostenfaktor gegenüber Tabelle 5 hier auf ca. 0,051 €/GBit/km verringert.

Die Netzkostenfaktoren verbessern sich weiter durch weitere Innovationen und den jährlichen Preisverfall der Komponenten, da das Netz bis weit über 10 Jahre Bestand hat. Insbesondere können auch Erhöhte Spektrale Effizienten durch zukünftige Technologien mit besseren Kostenfaktoren eingesetzt werden, wobei das erst durch die, der Erfindung zugrunde liegenden, Modularisierung und Unabhängigkeit der Netzstruktur möglich wird.

## Beispiel Netzszenario 2 für den Einsatz teilweise flexibler Komponenten am Kernnetzrand

Ein Beispiel Szenario für die Erfindung für den Einsatz teilweise flexibler Komponenten am Kernnetzrand ist in Figur 11 dargestellt.

Im Kernnetz mit 12 Knoten am Kernnetzrand befindet sich nur das passive 12x12 Port AWG mit einer Bandbreite von 400 GHz für die transparenten optisch gerouteten AWG Frequenzkanälen 7, sowie die Glasfaser Trunks inklusive OLAs, die das AWG mit den einzelnen Knoten verbindet.

Pro Knoten ist eine duplex Glasfaserverbindung für die ankommenden und abgehenden optischen Signale notwendig.

Auf der Sendeseite der Knoten befinden sich passive optische 96:1 Multiplexer, die 96 DWDM Kanäle mit einer Bandbreite von jeweils 50 GHz auf eine Ausgangsfaser zusammenführen können. Diese DWDM Kanäle werden durch adaptive Sendern genutzt, die in ihrer Frequenz und z.B. auch in ihrer Spektralen Effizienz gesteuert werden können. Damit können wahlfreie und unabhängige Verbindungen zu beliebigen anderen Netzknoten aufgebaut werden, indem nur die Frequenz für den Zielknoten und die Spektrale Effizienz für die notwendige Bitrate gewählt werden. Für den Zielknoten muss dabei ein freier optisch transparenter DWDM Kanal zur Verfügung stehen, wobei in diesem Szenario jeder andere Knoten durch 8 DWDM Kanäle mit 50 GHz Bandbreite für den entsprechenden 400 GHz AWG Frequenzkanal zur Verfügung steht.

Die Übertragungskapazität zwischen den einzelnen Knoten kann durch die Anschaltung weiterer Receiver oder eine Erhöhung der Bitrate durch die adaptiven Transceiver in weiten Bereichen erhöht werden, z.B. von 1x100 GBit/s für eine Spektrale Effizienz von 2Bit/s/Hz über einen DWDM Kanal bis hin zu 8x350 GBit/s = 2,8 TBit/s für eine Spektrale Effizienz von 7Bit/s/Hz über 8 DWDM Kanäle.

Auf der Empfangsseite werden die eingehenden 96 DWDM Kanäle durch Wellenlängen Selektive Switche WSS mit einer festen Bandbreite von z.B. 50 GHz auf die entsprechenden Ausgangsfasern und zu den entsprechenden adaptiven Empfänger der Transceivern geschaltet, die an die gesendeten adaptiven Signale unterschiedlicher Bitraten angepasst sein müssen. Dabei muss die Zuordnung der optischen Frequenzen und der adaptiven Signale der Transceiver und der WSS Komponenten durch das Netzmanagement im Konfigurationsmanagement erfolgen. Für die Komponenten und den Betrieb sind weitere Management Funktionalitäten notwendig, z.B. für die Überwachung und Regelung der optischen Frequenzen für das AWG, die Filter, die WSS und die Transceiver DWDM Kanalfrequenzen. Die flexible Funktionalität befindet sich auch in diesem Beispiel durch die Modularisierung und Unabhängigkeit der Komponenten nur in den Netzknoten am Kernnetzrand, so dass das Kernnetz nicht beeinflusst oder verändert wird.

## Beispiel Netzszenario 3 für den Einsatz flexibler Komponenten am Kernnetzrand

Ein Beispiel Szenario für die Erfindung für den Einsatz flexibler Komponenten am Kernnetzrand ist in Figur 12 dargestellt.

Im Kernnetz mit 12 Knoten am Kernnetzrand befindet sich nur das passive 12x12 Port AWG mit einer Bandbreite von 400 GHz für die transparenten optisch gerouteten AWG Frequenzkanälen 7, sowie die Glasfaser Trunks inklusive OLAs, die das AWG mit den einzelnen Knoten verbindet.

Pro Knoten ist eine duplex Glasfaserverbindung für die ankommenden und abgehenden optischen Signale notwendig.

Auf der Sende- und auch der Empfangsseite der Knoten befinden sich adaptive flexible Wellenlängen Selektive Switch aWSS die sowohl die Bandbreite als auch die Frequenzlage der optischen Kanäle flexibel bereitstellen und schalten können. Dabei werden bis zu M Eingangssignale von den adaptiven Sendern der Transceiver auf M Eingangsfasern auf einen Faserausgang geschaltet und dem AWG im entfernten zentralen Knoten zugeführt.

Durch die 12 Netzknoten und das 12x12 AWG des Kernnetzes beträgt die Bandbreite der optisch transparent gerouteten AWG Frequenzkanäle 400 GHz, die den Rahmen für die optischen Bandbreiten und Signale der flexiblen adaptiven Transceiver und WSS vorgeben.

Damit können wahlfreie und unabhängige Verbindungen zu beliebigen anderen Netzknoten aufgebaut werden, indem nur die Frequenz für den Zielknoten und die Spektrale Effizienz für die entsprechende adaptive Bitrate gewählt werden. Für den Zielknoten muss dabei nur eine freie Bandbreite in dem entsprechenden 400 GHz breiten transparenten optischen AWG Frequenzkanal zur Verfügung stehen.

Die Übertragungskapazität zwischen den einzelnen Knoten kann durch die Anschaltung weiterer adaptiver Receiver oder eine Erhöhung der Bitrate durch die adaptiven Transceiver in weiten Bereichen erhöht werden, z.B. durch Spektrale Effizienten von 2Bit/s/Hz bis zu 7Bit/s/Hz über entsprechende flexible Bandbreiten. Die maximale Kapazität zwischen 2 Knoten ist dabei auch auf ca. 400 GHz x 7Bit/s/Hz = 2,8 TBit/s beschränkt.

Auf der Empfangsseite werden die eingehenden flexiblen optischen Signale auf einen adaptiven flexiblen Wellenlängen Selektiven Switch aWSS geschaltet, der sowohl die Bandbreite als auch die Frequenzlage der optischen Kanäle flexibel auf die M Ausgangsfasern und zu den jeweiligen adaptiven Empfänger der Transceiver schaltet, die an die gesendeten adaptiven Signale unterschiedlicher Bitraten angepasst sein müssen. Dabei muss die Zuordnung der optischen Frequenzen und der adaptiven Signale der Transceiver und der adaptiven aWSS Komponenten durch das Netzmanagement im Konfigurationsmanagement erfolgen. Für die Komponenten und den Betrieb sind weitere Management Funktionalitäten notwendig, z.B. für die Überwachung und Regelung der optischen Frequenzen für das AWG, die Filter, die WSS und die Transceiver DWDM Kanalfrequenzen. Die flexible Funktionalität befindet sich auch in diesem Beispiel durch die Modularisierung und Unabhängigkeit der Komponenten nur in den Netzknoten am Kernnetzrand, so dass das Kernnetz nicht beeinflusst oder verändert wird.

## Beispiel Netzszenario 4 für den Einsatz von NxN AWGs in Ringstrukturen

Ein Beispiel Szenario für die Erfindung für den Einsatz in Ringstrukturen ist in Figur 13 dargestellt. Dabei werden 2 redundante NxN AWGs in zwei redundante Kernnetzknoten K1,1 und K1,2 für die redundante Erschließung von Regio-, Metro- (siehe US 2002/0191250 A1), oder Access Bereichen über Ringstrukturen eingesetzt. Über zwei z.B. 12x12 AWGs in den 2 Netzknoten werden 2 je Router R1,1 und R1,2 mit den Routern R in den Access Knoten Ax,y verbunden, wobei y dem jeweiligen Access Knoten im Ring x entspricht. Der jeweils 12te Knoten in den Access Ringen ist z.B. der jeweils andere Kernnetzknoten, so dass beide Kernnetzknoten ebenfalls verbunden werden können. Insgesamt stehen pro Faser 12 AWG Frequenzkanäle mit je 400 GHz Bandbreite für die AWG Frequenzkanäle zur Verfügung, die z.B. durch je 8x50 GHz DWDM Kanäle genutzt werden können, wobei hier passive Filterkomponenten eingesetzt werden können. Diese Ring Struktur kann 2 redundanten Kernnetzknoten mit insgesamt $12 \times 11 = 132$ Access Knoten über 2x12 =24 redundante Ringe mit jeweils 11 Knoten pro Ring verbinden. Die bereitgestellte Bandbreite zwischen einem Kernknoten und einem Access Knoten ist durch die Bandbreite der 12x12 Port AWGs zu 400 GHz bestimmt. Diese kann mit entsprechenden Spektralen Effizienten mit z.B. bis zu 7Bit/s/Hz genutzt werden, so dass die Bandbreite in einem transparenten Kanal bis zu 2,8 TBit/s betragen kann. Für das Ring Szenario ergeben sich für eine Basiskonfiguration mit Nutzung jeweils eines der 8 möglichen 50 GHz breiten DWDM Kanäle für die Anbindung aller Access Knoten an einen Kernnetzknoten eine redundante Netzbandbreite von 11x12x50 GHz = 6,6 THz. Mit 100 GBit/s Transceivern mit der Spektralen Effizienz von 2Bit/s/Hz ergibt sich eine redundante Netzkapazität von 13,2 TBit/s.

Für den Vollausbau mit 8x50 GHz DWDM Kanälen kann die Netzbandbreite auf 8x6,6 THz = 52,8 THz erhöht werden. Mit 100 GBit/s Transceivern mit der Spektralen Effizienz von 2Bit/s/Hz ergibt sich eine redundante Netzkapazität von 2x52,8 TBit/s = 105,6 TBit/s. Diese kann für Transceiver mit Spektralen Effizienten von 7Bit/s/Hz auf bis zu 7x52,8 TBit/s = 369,6 TBit/s gesteigert werden.

Für die Komponenten und den Betrieb sind Management Funktionalitäten notwendig, z.B. für die Überwachung und Regelung der optischen Frequenzen für das AWG, die Filter und die Transceiver DWDM Kanalfrequenzen. Diese optischen DWDM Kanalfrequenzen bestimmen den Zielknoten und müssen vom Konfigurationsmanagement bestimmt werden.

Der Einbau von flexiblen adaptiven Komponenten in den Netzknoten ist hier auch möglich, z.B. ROADMs oder WSS, so dass die Erfindung nicht auf feste passive Komponenten beschränkt ist.

## Beispiel Netzszenario 5 für den kombinierten Einsatz eines NxN AWG und eines parallel geschalteten WSS in einem Netzknoten am Kernnetzrand

Ein Beispiel Szenario für die Erfindung für den kombinierten Einsatz von NxN AWGs und WSS in einem Netzknoten am Kernnetzrand ist in Figur 15 für ein N=12 Knotennetz dargestellt. Da das 1. AWG Frequenzband mit der Frequenz $f_1$ und der Bandbreite B = 400 GHz auf den jeweiligen Ausgangsknoten durch das NxN AWG zurückgeroutet wird, können diese Frequenzbänder vor dem AWG mit den Filtern F ausgefiltert und einem 12x12 Port WSS (Wavelength Selected Switch) zugeführt werden, der parallel zum NxN AWG angeordnet ist. Diese Bänder können bis zu 8x50GHz DWDM Kanäle tragen und der WSS kann diese Bänder wahlfrei auf die verschiedenen Ausgangsport schalten, die dann durch entsprechende Filter F wieder den Ausgangsfasern des AWGs zugeführt werden. Damit können bis zu 8x50 GHz Kanäle pro Netzknoten und somit maximal $12 \times 8 = 96$x50 GHz Kanäle zusätzlich verschaltet werden, um z.B. zusätzliche Linkkapazitätsbedarfe zwischen entsprechenden Knoten bereitzustellen, die die maximale AWG Linkkapazitäten übersteigen. Dabei sind nur für den WSS aber Blockierungen möglich, da pro Knoten nur 8 zusätzliche 50 GHz Kanäle für den WSS im ersten AWG Band bereitgestellt werden können.

Die flexible Funktionalität befindet sich auch in diesem Beispiel durch die Modularisierung und Unabhängigkeit der Komponenten nur in den Netzknoten am Kernnetzrand, wobei insbesondere die zusätzlichen Filter für das erste AWG Band und der WSS in dem Netzknoten eingebaut wird, der als Sternpunkt ausgewiesen ist, so dass das Kernnetz auch hier nicht beeinflusst oder verändert wird. Die Funktionalität des WSS ist dabei von der Funktionalität des NxN AWG entkoppelt und damit auch unabhängig.

### Beispiel Netzszenario 6 für den Einsatz von NxN AWGs in Datenzentren

Ein Beispiel Szenario für die Erfindung für den Einsatz in Datenzentren ist in Figur 16 dargestellt. Das TOR-NET Konzept wird dazu benutzt, um in Datenzentren die hierarchische Strukturen zu verringern, wobei mehrere Switchebenen auf eine Switchebene reduziert werden können. Dazu werden die TOR-NET Switche auf der Downlinkseite nach konventioneller Art z.B. mit den Servern verbunden. Auf der Uplinkseite werden die TOR-NET Switche entsprechend der dargelegten Erfindung optisch transparent über ein oder mehrere optisch passive NxN AWGs vollvermascht. Aus Sicherheitsgründen sollten auch hier zwei parallele Netze A und B vorliegen, so dass im Störungsfall vom Workingpfad, z.B. im Netz A, auf den Protectionpfad, z.B. im Netz B, umgeschaltet werden kann. Insgesamt können Switchebenen eingespart werden, so dass sich Capex und Opex Vorteile ergeben können.

### Management Nutzung der transparenten Pfade der Knoten auf sich selbst

Ein vollvermaschtes Netz benötigt $N * (N - 1)/2$ bidirektionale Pfade zwischen den $N$ Netzknoten. Durch das vom AWG bereitgestellte vollvermaschte Frequenz Shuffle werden insgesamt $N * N/2$ bidirektionale Pfade bereitgestellt, die zusätzlich auch die Pfade für die Knoten auf sich selber enthalten. Diese Pfade können zusätzlich durch das Netzmanagement genutzt werden, z.B. für das Fault Management zur Überwachung der Glasfaserstrecken, insbesondere auch für ein proaktives Management zur Fehlererkennung im Vorfeld von auftretenden Fehlern, z.B. bei einer zeitlichen Degradation der Pfade.

### Energie Effizienz

Durch den Einsatz von "coloured" optischen robusten DWDM Interfaces in den Routern und Switches, die in den Netzknoten positioniert sind, werden keine weiteren Transit-Transceiver in den transparenten Ende-zu-Ende DWDM Kanälen benötigt. Damit werden die Anzahl der Netzkomponenten, der Energieverbrauch und damit auch die Capex und Opex Aufwände reduziert. Gleichzeitig wird die Energieeffizienz und die Kosten pro Gbit/s im Netz minimiert.

### Capex Reduzierung

Durch die Verringerung der Anzahl der Komponenten im quasi passiven optisch gerouteten Kernnetz sowie in den Netzknoten am Kernnetzrand werden die einmaligen Anschaffungsaufwände für die Komponenten (Capex) reduziert.

Da erfindungsgemäß eine Vollvermaschung über ein quasi passives optisches Netz vorliegt, werden, nach dem Grundaufbau des Kernnetzes mit Standard Singlemode Fasern (SSMF) und Optischen In-Line Amplifier (OLAs), für die weitere Skalierung der Netzkapazität nur noch weitere Transceiver in den Knoten nach Bedarf benötigt. Dieser Bedarf wird für jeden einzelnen Ende-zu-Ende DWDM Kanal im vollvermaschten Netz durch individuelles Monitoring bestimmt und entsprechend ausgebaut. Damit kann eine Lineare bzw. Sublineare Kostenskalierung mit dem Kapazitätsbedarf durchgeführt werden, da ausschließlich zwei weitere DWDM Transceiver und sonst keine weiteren Komponenten für einen weiteren DWDM Kanal ergänzt oder ersetzt werden müssen. Wird ein DWDM Transceiver-Paar durch Interfaces Interface mit höherer Kapazität ersetzt, dann kann das ersetzte Transceiver-Paar an anderer Stelle wiederverwendet werden, wodurch der Capex Aufwand verringert wird.

### Opex Reduzierung

Durch die Verringerung der Anzahl der Komponenten im quasi passiven optisch gerouteten Kernnetz sowie in den Netzknoten am Kernnetzrand werden die ständig wiederkehrenden Betriebsaufwände (Opex) nachhaltig reduziert, da weniger Komponenten gemanged werden müssen. Für die Skalierbarkeit werden die Transceiver nur nach Bedarf in den Netzknoten ergänzt, wobei durch das Monitoring eine Trendanalyse durchgeführt und eine rechtzeitige Vorhersage und Planung des Bedarfs einer Kapazitätserhöhung pro DWDM Kanal erfolgen kann, wodurch weitere Opex Aufwände reduziert werden können.

### Migration

Die Erfindung bzw. das Verfahren kann in ein bestehendes Netz migriert werden, indem entsprechende AWGs an entsprechenden zentralen Stellen im Netz bereitgestellt werden und an entsprechende Fasern zu den einzelnen Knoten angeschaltet werden. Da das AWG ein passives optisches Element mit entsprechenden Filtereigenschaften ist müssen Einfügedämpfungen und Abhängigkeiten in der optischen Frequenzdomäne berücksichtigt werden.

Insgesamt können nach Bereitstellung der Kernnetzinfrastruktur die einzelnen Pfade beliebig und unabhängig voneinander aufgebaut werden, indem die entsprechenden Transceiver mit den vorgesehenen optischen Frequenzen bestückt werden.

### Reduzierung der Kosten pro Gbit/s (Netzkostenfaktor) für das Gesamtnetz

Durch die Modularisierung und die damit verbunden Unabhängigkeit der Netz-Strukturen und Funktionalitäten, sowie der hier dargelegten Vorteile, ist ein sehr kosteneffektiver Aufbau, bedarfsgerechter Ausbau und auch die Operation des Netzes möglich, so dass die Capex und Opex Aufwäde minimiert und die Kosten pro GBit/s/km (Netzkostenfaktor) nachhaltig reduziert werden können.

### Anwendungsbereiche

Neben der Anwendung der Erfindung in nationalen und internationalen Kernnetzen ist eine Anwendung in Backbonenetzen, in Regionalnetzen, in Metronetzen, in Accessnetzen, sowie in Datenzentren sinnvoll, wobei die beschriebenen Vorteile mit entsprechendem Gewicht eingebracht werden können. Insbesondere sind auch Ringstrukturen und verschachtelte Ringstrukturen möglich, in denen die Erfindung eingesetzt werden kann.

Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." bedeutet überdies "und/oder".

Tabelle 1

| Port Zahl N | Zahl der Duplex AWG Kanäle Knoten-Knoten | Knoten-Knoten Bandbreite [THz] | Port Zahl N | Zahl der Duplex AWG Kanäle Knoten-Knoten | Knoten-Knoten Bandbreite [THz] | Port Zahl N | Zahl der Duplex AWG Kanäle Knoten-Knoten | Knoten-Knoten Bandbreite [THz] | Port Zahl N | Zahl der Duplex AWG Kanäle Knoten-Knoten | Knoten-Knoten Bandbreite [THz] |
|---|---|---|---|---|---|---|---|---|---|---|---|
| - | - | - | 25 | 1 | 192,00 | 49 | 1 | 97,96 | 73 | 1 | 65,75 |
| - | - | - | 26 | 1 | 184,62 | 50 | 1 | 96,00 | 74 | 1 | 64,86 |
| 3 | 1 | 1600,00 | 27 | 1 | 177,78 | 51 | 1 | 94,12 | 75 | 1 | 64,00 |
| 4 | 1 | 1200,00 | 28 | 1 | 171,43 | 52 | 1 | 92,31 | 76 | 1 | 63,16 |
| 5 | 1 | 960,00 | 29 | 1 | 165,52 | 53 | 1 | 90,57 | 77 | 1 | 62,34 |
| 6 | 1 | 800,00 | 30 | 1 | 160,00 | 54 | 1 | 88,89 | 78 | 1 | 61,54 |
| 7 | 1 | 685,71 | 31 | 1 | 154,84 | 55 | 1 | 87,27 | 79 | 1 | 60,76 |
| 8 | 1 | 600,00 | 32 | 1 | 150,00 | 56 | 1 | 85,71 | 80 | 1 | 60,00 |
| 9 | 1 | 533,33 | 33 | 1 | 145,45 | 57 | 1 | 84,21 | 81 | 1 | 59,26 |
| 10 | 1 | 480,00 | 34 | 1 | 141,18 | 58 | 1 | 82,76 | 82 | 1 | 58,54 |
| 11 | 1 | 436,36 | 35 | 1 | 137,14 | 59 | 1 | 81,36 | 83 | 1 | 57,83 |
| 12 | 1 | 400,00 | 36 | 1 | 133,33 | 60 | 1 | 80,00 | 84 | 1 | 57,14 |
| 13 | 1 | 369,23 | 37 | 1 | 129,73 | 61 | 1 | 78,69 | 85 | 1 | 56,47 |
| 14 | 1 | 342,86 | 38 | 1 | 126,32 | 62 | 1 | 77,42 | 86 | 1 | 55,81 |
| 15 | 1 | 320,00 | 39 | 1 | 123,08 | 63 | 1 | 76,19 | 87 | 1 | 55,17 |
| 16 | 1 | 300,00 | 40 | 1 | 120,00 | 64 | 1 | 75,00 | 88 | 1 | 54,55 |
| 17 | 1 | 282,35 | 41 | 1 | 117,07 | 65 | 1 | 73,85 | 89 | 1 | 53,93 |
| 18 | 1 | 266,67 | 42 | 1 | 114,29 | 66 | 1 | 72,73 | 90 | 1 | 53,33 |
| 19 | 1 | 252,63 | 43 | 1 | 111,63 | 67 | 1 | 71,64 | 91 | 1 | 52,75 |
| 20 | 1 | 240,00 | 44 | 1 | 109,09 | 68 | 1 | 70,59 | 92 | 1 | 52,17 |
| 21 | 1 | 228,57 | 45 | 1 | 106,67 | 69 | 1 | 69,57 | 93 | 1 | 51,61 |
| 22 | 1 | 218,18 | 46 | 1 | 104,35 | 70 | 1 | 68,57 | 94 | 1 | 51,06 |

| Port Zahl N | Zahl der Duplex AWG Kanäle Knoten-Knoten | Knoten-Knoten Bandbreite [THz] | Port Zahl N | Zahl der Duplex AWG Kanäle Knoten-Knoten | Knoten-Knoten Bandbreite [THz] | Port Zahl N | Zahl der Duplex AWG Kanäle Knoten-Knoten | Knoten-Knoten Bandbreite [THz] | Port Zahl N | Zahl der Duplex AWG Kanäle Knoten-Knoten | Knoten-Knoten Bandbreite [THz] |
|---|---|---|---|---|---|---|---|---|---|---|---|
| 23 | 1 | 208,70 | 47 | 1 | 102,13 | 71 | 1 | 67,61 | 95 | 1 | 50,53 |
| 24 | 1 | 200,00 | 48 | 1 | 100,00 | 72 | 1 | 66,67 | 96 | 1 | 50,00 |

Tabelle 2

| Knoten-Knoten Bandbreite [GHz] | SE=1Bit/s/Hz Knoten-Knoten Kapazität [Tbit/s] | SE=2Bit/s/Hz Knoten-Knoten Kapazität [Tbit/s] | SE=3Bit/s/Hz Knoten-Knoten Kapazität [Tbit/s] | SE=4Bit/s/Hz Knoten-Knoten Kapazität [Tbit/s] | SE=5Bit/s/Hz Knoten-Knoten Kapazität [Tbit/s] | SE=6Bit/s/Hz Knoten-Knoten Kapazität [Tbit/s] | SE=7Bit/s/Hz Knoten-Knoten Kapazität [Tbit/s] |
|---|---|---|---|---|---|---|---|
| 50 | 0,050 | 0,100 | 0,150 | 0,200 | 0,250 | 0,300 | 0,350 |
| 60 | 0,060 | 0,120 | 0,180 | 0,240 | 0,300 | 0,360 | 0,420 |
| 64 | 0,064 | 0,128 | 0,192 | 0,256 | 0,320 | 0,384 | 0,448 |
| 100 | 0,100 | 0,200 | 0,300 | 0,400 | 0,500 | 0,600 | 0,700 |
| 120 | 0,120 | 0,240 | 0,360 | 0,480 | 0,600 | 0,720 | 0,840 |
| 150 | 0,150 | 0,300 | 0,450 | 0,600 | 0,750 | 0,900 | 1,050 |
| 160 | 0,160 | 0,320 | 0,480 | 0,640 | 0,800 | 0,960 | 1,120 |
| 192 | 0,192 | 0,384 | 0,576 | 0,768 | 0,960 | 1,152 | 1,344 |
| 200 | 0,200 | 0,400 | 0,600 | 0,800 | 1,000 | 1,200 | 1,400 |
| 240 | 0,240 | 0,480 | 0,720 | 0,960 | 1,200 | 1,440 | 1,680 |
| 300 | 0,300 | 0,600 | 0,900 | 1,200 | 1,500 | 1,800 | 2,100 |
| 320 | 0,320 | 0,640 | 0,960 | 1,280 | 1,600 | 1,920 | 2,240 |
| 400 | 0,400 | 0,800 | 1,200 | 1,600 | 2,000 | 2,400 | 2,800 |
| 480 | 0,480 | 0,960 | 1,440 | 1,920 | 2,400 | 2,880 | 3,360 |
| 600 | 0,600 | 1,200 | 1,800 | 2,400 | 3,000 | 3,600 | 4,200 |
| 800 | 0,800 | 1,600 | 2,400 | 3,200 | 4,000 | 4,800 | 5,600 |
| 960 | 0,960 | 1,920 | 2,880 | 3,840 | 4,800 | 5,760 | 6,720 |
| 1200 | 1,200 | 2,400 | 3,600 | 4,800 | 6,000 | 7,200 | 8,400 |
| 1600 | 1,600 | 3,200 | 4,800 | 6,400 | 8,000 | 9,600 | 11,200 |

Tabelle 3

| Port Zahl N | Zahl der Duplex AWG Kanäle für Full Mesh | Full Mesh Bandbreite [THz] |
|---|---|---|
| - | - | - |
| - | - | - |
| 3 | 3 | 4,8 |
| 4 | 6 | 7,2 |
| 5 | 10 | 9,6 |
| 6 | 15 | 12 |
| 7 | 21 | 14,4 |
| 8 | 28 | 16,8 |
| 9 | 36 | 19,2 |
| 10 | 45 | 21,6 |
| 11 | 55 | 24 |
| 12 | 66 | 26,4 |
| 13 | 78 | 28,8 |
| 14 | 91 | 31,2 |
| 15 | 105 | 33,6 |
| 16 | 120 | 36 |
| 17 | 136 | 38,4 |
| 18 | 153 | 40,8 |
| 19 | 171 | 43,2 |
| 20 | 190 | 45,6 |
| 21 | 210 | 48 |
| 22 | 231 | 50,4 |
| 23 | 253 | 52,8 |
| 25 | 300 | 57,6 |
| 26 | 325 | 60 |
| 27 | 351 | 62,4 |
| 28 | 378 | 64,8 |
| 29 | 406 | 67,2 |
| 30 | 435 | 69,6 |
| 31 | 465 | 72 |
| 32 | 496 | 74,4 |
| 33 | 528 | 76,8 |
| 34 | 561 | 79,2 |
| 35 | 595 | 81,6 |
| 36 | 630 | 84 |
| 37 | 666 | 86,4 |
| 38 | 703 | 88,8 |
| 39 | 741 | 91,2 |
| 40 | 780 | 93,6 |
| 41 | 820 | 96 |
| 42 | 861 | 98,4 |
| 43 | 903 | 100,8 |
| 44 | 946 | 103,2 |
| 45 | 990 | 105,6 |
| 46 | 1035 | 108 |
| 47 | 1081 | 110,4 |
| 49 | 1176 | 115,2 |
| 50 | 1225 | 117,6 |
| 51 | 1275 | 120 |
| 52 | 1326 | 122,4 |
| 53 | 1378 | 124,8 |
| 54 | 1431 | 127,2 |
| 55 | 1485 | 129,6 |
| 56 | 1540 | 132 |
| 57 | 1596 | 134,4 |
| 58 | 1653 | 136,8 |
| 59 | 1711 | 139,2 |
| 60 | 1770 | 141,6 |
| 61 | 1830 | 144 |
| 62 | 1891 | 146,4 |
| 63 | 1953 | 148,8 |
| 64 | 2016 | 151,2 |
| 65 | 2080 | 153,6 |
| 66 | 2145 | 156 |
| 67 | 2211 | 158,4 |
| 68 | 2278 | 160,8 |
| 69 | 2346 | 163,2 |
| 70 | 2415 | 165,6 |
| 71 | 2485 | 168 |
| 73 | 2628 | 172,8 |
| 74 | 2701 | 175,2 |
| 75 | 2775 | 177,6 |
| 76 | 2850 | 180 |
| 77 | 2926 | 182,4 |
| 78 | 3003 | 184,8 |
| 79 | 3081 | 187,2 |
| 80 | 3160 | 189,6 |
| 81 | 3240 | 192 |
| 82 | 3321 | 194,4 |
| 83 | 3403 | 196,8 |
| 84 | 3486 | 199,2 |
| 85 | 3570 | 201,6 |
| 86 | 3655 | 204 |
| 87 | 3741 | 206,4 |
| 88 | 3828 | 208,8 |
| 89 | 3916 | 211,2 |
| 90 | 4005 | 213,6 |
| 91 | 4095 | 216 |
| 92 | 4186 | 218,4 |
| 93 | 4278 | 220,8 |
| 94 | 4371 | 223,2 |
| 95 | 4465 | 225,6 |

(fortgesetzt)

| Port Zahl N | Zahl der Duplex AWG Kanäle für Full Mesh | Full Mesh Bandbreite [THz] | Port Zahl N | Zahl der Duplex AWG Kanäle für Full Mesh | Full Mesh Bandbreite [THz] | Port Zahl N | Zahl der Duplex AWG Kanäle für Full Mesh | Full Mesh Bandbreite [THz] |
|---|---|---|---|---|---|---|---|---|
| 24 | 276 | 55,2 | 48 | 1128 | 112,8 | 72 | 2556 | 170,4 |
| 96 | 4560 | 228 | | | | | | |

Tabelle 4

| Anzahl Der Netz Knoten N | Anzahl der Duplex Pfade Full Mesh | AWG Kanal Bandbreite [GHz] | Bandbreite aller Pfade Full Mesh [THz] | SE=1Bit/s/Hz Knoten-Knoten Kapazität [Tbit/s] | SE=2Bit/s/Hz Knoten-Knoten Kapazität [Tbit/s] | SE=3Bit/s/Hz Knoten-Knoten Kapazität [Tbit/s] | SE=4Bit/s/Hz Knoten-Knoten Kapazität [Tbit/s] | SE=5Bit/s/Hz Knoten-Knoten Kapazität [Tbit/s] | SE=6Bit/s/Hz Knoten-Knoten Kapazität [Tbit/s] | SE=7Bit/s/Hz Knoten-Knoten Kapazität [Tbit/s] |
|---|---|---|---|---|---|---|---|---|---|---|
| 3 | 3 | 1600,00 | 4,8 | 4,8 | 9,6 | 14,4 | 19,2 | 24,0 | 28,8 | 33,6 |
| 4 | 6 | 1200,00 | 7,2 | 7,2 | 14,4 | 21,6 | 28,8 | 36,0 | 43,2 | 50,4 |
| 5 | 10 | 960,00 | 9,6 | 9,6 | 19,2 | 28,8 | 38,4 | 48,0 | 57,6 | 67,2 |
| 6 | 15 | 800,00 | 12 | 12,0 | 24,0 | 36,0 | 48,0 | 60,0 | 72,0 | 84,0 |
| 8 | 28 | 600,00 | 16,8 | 16,8 | 33,6 | 50,4 | 67,2 | 84,0 | 100,8 | 117,6 |
| 10 | 45 | 480,00 | 21,6 | 21,6 | 43,2 | 64,8 | 86,4 | 108,0 | 129,6 | 151,2 |
| 12 | 66 | 400,00 | 26,4 | 26,4 | 52,8 | 79,2 | 105,6 | 132,0 | 158,4 | 184,8 |
| 15 | 105 | 320,00 | 33,6 | 33,6 | 67,2 | 100,8 | 134,4 | 168,0 | 201,6 | 235,2 |
| 16 | 120 | 300,00 | 36 | 36,0 | 72,0 | 108,0 | 144,0 | 180,0 | 216,0 | 252,0 |
| 20 | 190 | 240,00 | 45,6 | 45,6 | 91,2 | 136,8 | 182,4 | 228,0 | 273,6 | 319,2 |
| 24 | 276 | 200,00 | 55,2 | 55,2 | 110,4 | 165,6 | 220,8 | 276,0 | 331,2 | 386,4 |
| 25 | 300 | 192,00 | 57,6 | 57,6 | 115,2 | 172,8 | 230,4 | 288,0 | 345,6 | 403,2 |
| 30 | 435 | 160,00 | 69,6 | 69,6 | 139,2 | 208,8 | 278,4 | 348,0 | 417,6 | 487,2 |
| 32 | 496 | 150,00 | 74,4 | 74,4 | 148,8 | 223,2 | 297,6 | 372,0 | 446,4 | 520,8 |
| 40 | 780 | 120,00 | 93,6 | 93,6 | 187,2 | 280,8 | 374,4 | 468,0 | 561,6 | 655,2 |
| 48 | 1128 | 100,00 | 112,8 | 112,8 | 225,6 | 338,4 | 451,2 | 564,0 | 676,8 | 789,6 |
| 75 | 2775 | 64,00 | 177,6 | 177,6 | 355,2 | 532,8 | 710,4 | 888,0 | 1065,6 | 1243,2 |
| 80 | 3160 | 60,00 | 189,6 | 189,6 | 379,2 | 568,8 | 758,4 | 948,0 | 1137,6 | 1327,2 |
| 96 | 4560 | 50,00 | 228 | 228,0 | 456,0 | 684,0 | 912,0 | 1140,0 | 1368,0 | 1596,0 |

Tabelle 5

| Komponente | Zahl | Aufwand | Summe |
|---|---|---|---|
| Bidirektion Faserlänge AWG - Knoten in km | 11 | 1000 km | 11.000 km |
| Bidirektionale GLAs | 99 | 15,00 T€ | 1.485,- T€ |
| 12x12 AWG, 400GHz AWG Kanalbandbreite | 1 | 5,00 T€ | 5,00 T€ |
| 1:12 Mux/Demux | 24 | 0,35 T€ | 8,4 T€ |
| 1:8 Mux/Demux | 288 | 0,30 T€ | 86,4 T€ |
| Aufwand für die Kernnetz Infrastruktur (ohne Fasern) | | | 1.584,80 T€ |
| | | | |
| 100GBit/s Transceiver für Basisausbau (66 Pfade Vollvermaschung) | 132 | 50,00 | 6.600,00 T€ |
| Netzkapazität für Basisausbau (66 Pfade Vollvermaschung) | - | - | 6,6 Tblt/s |
| Gesamtkosten für Basisausbau (66 Pfade Vollvermaschung) | | | 8.184,80 T€ |
| Kostenfaktor: Netzkosten per Gbit/s/km (66 Pfade Vollvermaschung) | - | - | 0,113 €/Gbit/s/km |
| | | | |
| 100GBit/s Transceiver für Vollausbau (8×66=528 Pfade Vollvermaschung) | 1056 | 50,00 | 52.800,00 T€ |
| Netzkapazität für Basisausbau (528 Pfade Vollvermaschung) | - | - | 52,8 Tbit/s |
| Gesamtkosten für Basisausbau (528 Pfade Vollvermaschung) | | | 54.384,80 T€ |
| Kostenfaktor: Netzkosten per Gbit/s/km (528 Pfade Vollvermaschung) | - | - | 0,094 €/Gbit/s/km |

**Patentansprüche**

1. Verfahren für den Aufbau, das Betreiben und/oder Skalierung eines modularen optisch gerouteten Transportnetz mit den Schritten:

   Bereitstellen eines quasi passiven, festen und vollvermaschten transparenten OTN-Kernnetzes (1) nach ITU-T G.709 mit N Netzknoten am Kernnetzrand (5) und mindestens einem AWG (6), Arrayed-Waveguide Grating, im OTN-Kernnetz (1), wodurch optische Ende-zu-Ende Verbindungskanäle bereitgestellt werden, die unabhängig voneinander überwacht und gemonitored werden können;
   Bereitstellen mindestens einer aktiven Komponente in jedem Netzknoten für die Übertragung von Daten über das Kernnetz (1), und
   Ändern, zur Skalierung des Netzes zur Erhöhung der Netzkapazität, mindestens einer der mindestens einen aktiven Komponente in mindestens einem Netzknoten unter unveränderter Beibehaltung des quasi passiven transparenten OTN-Kernnetzes (1), wobei die mindestens eine aktive Komponente ein optischer Transceiver ist mit Digitalen Signal Prozessoren, DSP, um störende Einflüsse der Glasfaserübertagung auf elektrischem Wege zu kompensieren.

2. Verfahren nach Anspruch 1, wobei

   i) das Kernnetz (1) als Sternnetz mit mindestens einem Sternpunkt (S) ausgebildet ist, wobei sich ein Sternpunkt (S) in einem Netzknoten am Kernnetzrand (5) befindet; und/oder ein Sternpunkt (S) außerhalb der Netzknoten befindet, oder
   ii) das Kernnetz (1) als Ringstruktur oder verschachtelte Ringstruktur ausgebildet ist.

3. Verfahren nach einem der vorhergehenden Ansprüche, wobei das Kernnetz (1) die folgenden passiven optischen Komponenten aufweist: Glasfasern wie Standard Singlemode Fasern, SSMF, optische In-Line Amplifier, OLAs, wobei das AWG vorzugsweise im Sternpunkt (S) installiert wird und vorzugsweise ein optisch passives NxN AWG ist, beispielsweise ein a-thermisches AWG.

**4.** Verfahren nach einem der Ansprüche 1 bis 3, wobei das AWG als verlustarmes NxN AWG mit einer AWG Frequenzkanal Bandbreite eingesetzt wird, und vorzugsweise optische AWG Frequenzkanäle auf N verschiedenen Eingangsfrequenzen und N verschiedenen Eingangsfasern bzw. Eingangsports auf N verschiedenen Ausgangsfasern bzw. Ausgangsports unter Beibehaltung der optischen Frequenzen, optisch passiv geroutet werden.

**5.** Verfahren nach Anspruch 1 bis 4, wobei das AWG als verlustarmer N × 1 Multiplexer und 1 × N Demultiplexer in DWDM, Dense Wavelength Division Multiplex, Systemen eingesetzt wird, und
vorzugsweise optische NxN AWG Frequenzkanäle (7) auf N verschiedenen optischen Eingangsfrequenzen und N verschiedenen Eingangsglasfasern bzw. Eingangsports auf eine Ausgangsfaser bzw. einen Ausgangsport unter Beibehaltung der optischen Frequenzen, optisch passiv geroutet werden.

**6.** Verfahren nach einem der Ansprüche 1 bis 5, wobei das AWG als verlustarmer M × 1 Multiplexer und 1 × M Demultiplexer in DWDM, Dense Wavelength Division Multiplex, Systemen eingesetzt wird, und
vorzugsweise optische DWDM Frequenzkanäle auf M verschiedenen optischen Eingangsfrequenzen und M verschiedenen Eingangsglasfasern bzw. Eingangsports auf eine Ausgangsfaser unter Beibehaltung der optischen Frequenzen, optisch passiv geroutet werden.

**7.** Verfahren nach einem der vorhergehenden Ansprüche, wobei alle optischen Pfade zwischen den Netzknoten unabhängig voneinander überwacht und/oder gemonitored werden und
vorzugsweise entsprechende Korrektur Aktionen eingeleitet werden können wie beispielsweise Proaktives Fault Management, Fault Management im Fehlerfall, ...usw.

**8.** Verfahren nach einem der vorhergehenden Ansprüche, wobei flexible und/oder aktive Netzkomponenten im Kernnetz aufgrund der bevorzugten Vollvermaschung der optischen Ende-zu-Ende Verbindungen entfallen, und/oder passive und/oder aktive optische und/oder elektrische Komponenten in den Netzknoten bereitgestellt werden, vorzugsweise optische Filter, optische Schalter, Switche, Router und weitere IP-Packet verarbeitende Komponenten.

**9.** Verfahren nach einem der vorhergehenden Ansprüche 1 bis 8, wobei unabhängige bzw. redundante AWGs bereitgestellt werden, auf die umgeschaltet werden kann, und/oder das Kernnetz (1) durch ein zweites, redundantes, vorzugsweise vollvermaschtes Teilkernnetz erweitert wird.

**10.** Netzwerksystem, das modular aufgebaut ist mit

einem quasi passiven und festen vollvermaschten transparenten OTN-Kernnetz (1) mit N Netzknoten am Kernnetzrand (5) und mindestens einem AWG (6), Arrayed-Waveguide Grating, im OTN-Kernnetz (1), wodurch optische Ende-zu-Ende Verbindungskanäle bereitgestellt werden, die unabhängig voneinander überwacht und gemonitored werden können;
mindestens einem Transceivers in jedem Netzknoten, wobei
das Netzwerksystem einfach skalierbar ist und Änderungen zur Skalierung des Netzes bereits ermöglicht, um die Netzkapazität zu erhöhen, indem Komponenten in den Netzknoten verändert bzw. ausgetauscht werden, unter unveränderter Beibehaltung des quasi passiven transparenten OTN-Kernnetzes (1).

**11.** Netzwerksystem Anspruch 10, wobei das Kernnetz (1) als Sternnetz mit mindestens einem Sternpunkt (S) ausgebildet ist, wobei sich ein Sternpunkt (S) in einem Netzknoten am Kernnetzrand (5) befindet; und/oder ein Sternpunkt (S) außerhalb der Netzknoten befindet.

**12.** Netzwerksystem nach Anspruch 10 oder 11, wobei das Kernnetz (1) mindestens eine der folgenden passiven optischen Komponenten aufweist: Glasfasern wie Standard Singlemode Fasern, SSMF, optische In-Line Amplifier, OLAs, wobei das AWG vorzugsweise im Sternpunkt (S) installiert ist und vorzugsweise ein optisch passives NxN AWG ist, beispielsweise ein thermischesAWG und/oder ein a-thermisches AWG ist.

**13.** Netzwerksystem nach einem der Ansprüche 10 bis 12, wobei das AWG ein verlustarmes NxN AWG mit einer AWG Frequenzkanal Bandbreite ist, und vorzugsweise optische AWG Frequenzkanäle auf N verschiedenen Eingangsfrequenzen und N verschiedenen Eingangsfasern bzw. Eingangsports auf N verschiedenen Ausgangsfasern bzw. Ausgangsports unter Beibehaltung der optischen Frequenzen, optisch passiv geroutet werden.

**14.** Netzwerksystem nach einem der Ansprüche 10 bis 13, wobei die Netzknoten passive und/oder aktive optische und/oder elektrische Komponenten aufweisen, vorzugsweise optische Filter, optische Schalter, Switche, Router und weitere IP-Packet verarbeitende Komponenten.

**Claims**

1. A method for setting up, operating and/or scaling a modular optically routed transport network including the steps of:

   providing a quasi passive, fixed and fully meshed transparent OTN core network (1) according to ITU-T G.709 with N network nodes at the core network edge (5) and at least one AWG (6), Arrayed-Waveguide Grating, in the OTN core network (1), thus providing optical end-to-end communication channels that can be supervised and monitored independently from each other;
   providing at least one active component in each network node for the transmission of data over the core network (1), and
   changing at least one of the at least one active component in at least one network node for scaling the network so as to increase the network capacity while the quasi passive transparent OTN core network (1) remains essentially unchanged, wherein the at least one active component is an optical transceiver comprising digital signal processors, DSPs, in order to compensate disturbing influences of the glass fiber transmission in an electrical way.

2. The method according to claim 1, wherein

   i) the core network (1) is configured as a star network with at least one star point (S), wherein a star point (S) is located in a network node at the core network edge (5), and/or a star point (S) is located outside the network nodes; or
   ii) the core network (1) is configured as a ring structure or nested ring structure.

3. The method according to any of the preceding claims, wherein the core network (1) comprises the following passive optical components: glass fibers such as standard single-mode fibers, SSMFs and optical in-line amplifiers, OLAs, wherein the AWG is preferably installed in the star point (S) and is preferably an optically passive N×N AWG, such as an α-thermal AWG.

4. The method according to any of claims 1 to 3, wherein the AWG is used as a low-loss N×N AWG having an AWG frequency channel bandwidth, and preferably optical AWG frequency channels on N different input frequencies and N different input fibers or input ports are optically passive-routed to N different output fibers or output ports while maintaining the optical frequencies.

5. The method according to claims 1 to 4, wherein the AWG is used as a low-loss N×1 multiplexer and 1×N demultiplexer in DWDM, dense wavelength division multiplex, systems, and
   preferably optical N×N AWG frequency channels (7) on N different input optical frequencies and N different input glass fibers or input ports are optically passive-routed to one output fiber or one output port while maintaining the optical frequencies.

6. The method according to any of claims 1 to 5, wherein the AWG is used as a low-loss M×1 multiplexer and 1×M demultiplexer in DWDM, dense wavelength division multiplex, systems, and
   preferably optical DWDM frequency channels on M different optical input frequencies and M different input glass fibers or input ports are optically passive-routed to one output fiber while maintaining the optical frequencies.

7. The method according to any one of the preceding claims, wherein all optical paths between the network nodes can be supervised and/or monitored independently of each other, and
   in case of a failure preferably appropriate corrective actions can be initiated such as proactive fault management, fault management, and the like.

8. Method according to any one of the preceding claims, wherein flexible and/or active network components in the core network are dispensable due to the preferred full mesh of the optical end-to-end links and/or wherein passive and/or active optical and/or electric components are provided in the network node, preferably optical filters, optical switches, switches, routers and other IP packet processing components.

9. The method according to any of preceding claims 1 to 8, wherein independent or redundant AWGs are provided, to which it can be switched, and/or wherein the core network (1) is extended by a second, redundant, preferably fully meshed sub-core network.

10. A network system that is constructed modular, comprising

a quasi passive and fixed fully meshed transparent OTN core network (1) with N network nodes at the core network edge (5) and at least one AWG (6), Arrayed Waveguide Grating in the OTN core network (1), thus providing optical end-to-end communication channels that can be supervised and monitored independently from each other; and
at least one transceiver in each network node,
wherein
the network system is easily scalable and already makes changes for scaling the network possible so as to increase the network capacity by merely changing or replacing components in the network nodes, while the quasi passive transparent OTN core network (1) is maintained unchanged.

11. The network system according to claim 10, wherein the core network (1) is configured as a star network with at least one star point (S), wherein a star point (S) is located in a network note at the core network edge (5) and/or a star point (S) is located outside the network nodes.

12. The network system according to claim 10 or 11, wherein the core network (1) comprises at least one of the following passive optical components: glass fibers such as standard single-mode fibers, SSMF and optical in-line amplifiers, OLAs, wherein the AWG is preferably installed in the star point (S) and is preferably an optically passive N×N AWG, such as a thermal AWG and/or an a-thermal AWG.

13. The network system according to any of claims 10 to 12, wherein the AWG is a low-loss N×N AWG having an AWG frequency channel bandwidth, and preferably optical AWG frequency channels on N different input frequencies and N different input fibers or input ports are optically passive-routed to N different output fibers or output ports while maintaining the optical frequencies.

14. The network system according to any of claims 10 to 13, wherein the network nodes comprise passive and/or active optical and/or electrical components, preferably optical filters, optical switches, switches, routers and other IP packet processing components.

**Revendications**

1. Procédé de constitution, d'exploitation et/ou de redimensionnement d'un réseau de transport modulaire à transmission optique, comprenant les étapes suivantes :

mise à disposition d'un réseau central OTN (1) transparent, intégralement maillé, quasi passif et fixe, selon ITU-T G.709, avec N noeuds de réseau au bord du réseau central (5) et au moins un réseau sélectif planaire, AWG (6), dans le réseau central OTN (1), des canaux de liaison optiques de bout en bout étant ainsi mis à disposition, lesquels peuvent être surveillés et monitorés indépendamment les uns des autres ;
mise à disposition d'au moins un composant actif dans chaque noeud de réseau pour la transmission de données sur le réseau central (1), et
modification, pour redimensionner le réseau afin d'accroître la capacité du réseau, au moins de l'un des au moins un composant actif dans au moins un noeud de réseau tout en maintenant inchangé le réseau central OTN transparent quasi passif (1), ledit au moins un composant actif étant un émetteur-récepteur optique avec des processeurs de signaux numériques, DSP, pour la compensation d'effets perturbateurs de la transmission à fibre optique par des moyens électriques.

2. Procédé selon la revendication 1, où

i) le réseau central (1) est réalisé comme réseau en étoile avec au moins un point neutre (S), un point neutre (S) se trouvant dans un noeud de réseau au bord (5) du réseau central ; et/ou un point neutre (S) se trouvant à l'extérieur des noeuds de réseau, ou
ii) le réseau central (1) est réalisé comme structure en anneau ou structure en anneau imbriquée.

3. Procédé selon l'une des revendications précédentes, où le réseau central (1) comprend les composants optiques passifs suivants : fibres optiques telles que fibres monomodes standard, SSMF, amplificateurs optiques en ligne, OLA, l'AWG étant de préférence installé sur le point neutre (S) et étant de préférence un AWG N×N optiquement passif, tel qu'un AWG athermique.

4. Procédé selon l'une des revendications 1 à 3, où l'AWG est mis en oeuvre comme un N×N AWG à faibles pertes avec une largeur de bande de canal de fréquence AWG, et où de préférence des canaux de fréquence optiques AWG sont routés de manière optiquement passive sur N fréquences d'entrée différentes et N fibres d'entrée ou ports d'entrée différents sur N fibres de sortie ou ports de sortie différents, en conservant les fréquences optiques.

5. Procédé selon les revendications 1 à 4, où l'AWG est utilisé comme multiplexeur N × 1 à faibles pertes et comme démultiplexeur 1 × N dans des systèmes à multiplexage par répartition en longueur d'onde ultra-dense, DWDM, et où, de préférence, des canaux de fréquence optiques (7) N×N AWG sont routés de manière optiquement passive sur N fréquences optiques d'entrée différentes et N fibres d'entrée ou ports d'entrée différents sur une fibre de sortie ou un port de sortie, en conservant les fréquences optiques.

6. Procédé selon l'une des revendications 1 à 5, où l'AWG est utilisé comme multiplexeur M × 1 à faibles pertes et comme démultiplexeur 1 × M dans des systèmes à multiplexage par répartition en longueur d'onde ultra-dense, DWDM, et où,

de préférence, des canaux de fréquence optiques DWDM sont routés de manière optiquement passive sur M fréquences optiques d'entrée différentes et M fibres optiques d'entrée ou ports d'entrée différents sur une fibre de sortie, en conservant les fréquences optiques.

7. Procédé selon l'une des revendications précédentes, où tous les chemins optiques entre les noeuds de réseau sont surveillés et/ou monitorés indépendamment les uns des autres et où,
de préférence, des actions correctives correspondantes peuvent être initialisées, telles qu'une gestion proactive des défauts, une gestion des défauts en cas de panne, ...etc.

8. Procédé selon l'une des revendications précédentes, où des composants de réseau flexibles et/ou actifs dans le réseau central sont supprimés en raison du maillage intégral préférentiel des liaisons optiques de bout en bout, et/ou des composants optiques et/ou électriques passifs et/ou actifs sont mis à disposition dans les noeuds de réseau, de préférence des filtres optiques, des commutateurs optiques, des commutateurs, des routeurs et d'autres composants de traitement de paquets IP.

9. Procédé selon l'une des revendications 1 à 8, où des AWG indépendants ou redondants sont mis à disposition, vers lesquels il est possible de commuter, et/ou où le réseau central (1) est étendu par un deuxième réseau central partiel redondant, de préférence intégralement maillé.

10. Système de réseau de conception modulaire, comprenant

un réseau central OTN (1) transparent, intégralement maillé, quasi passif et fixe, avec N noeuds de réseau au bord du réseau central (5) et au moins un réseau sélectif planaire, AWG (6), dans le réseau central OTN (1), des canaux de liaison optiques de bout en bout étant ainsi mis à disposition, lesquels peuvent être surveillés et monitorés indépendamment les uns des autres ;
au moins un émetteur-récepteur dans chaque noeud de réseau, où ledit système de réseau est aisément redimensionnable et permet déjà des modifications pour le redimensionnement du réseau afin d'accroître la capacité du réseau en modifiant ou en remplaçant des composants dans les noeuds du réseau, tout en maintenant inchangé le réseau central OTN transparent quasi passif (1).

11. Système de réseau revendication 10, où le réseau central (1) est réalisé comme réseau en étoile avec au moins un point neutre (S), un point neutre (S) se trouvant dans un noeud de réseau au bord (5) du réseau central ; et/ou un point neutre (S) se trouvant à l'extérieur des noeuds de réseau.

12. Système de réseau selon la revendication 10 ou la revendication 11, où le réseau central (1) comprend au moins l'un des composants optiques passifs suivants : fibres optiques telles que fibres monomodes standard, SSMF, amplificateurs optiques en ligne, OLA, l'AWG étant de préférence installé sur le point neutre (S) et étant de préférence un AWG N×N optiquement passif, tel qu'un AWG thermique et/ou un AWG athermique.

**13.** Système de réseau selon l'une des revendications 10 à 12, où l'AWG est un N×N AWG à faibles pertes avec une largeur de bande de canal de fréquence AWG, et où de préférence des canaux de fréquence optiques AWG sont routés de manière optiquement passive sur N fréquences d'entrée différentes et N fibres d'entrée ou ports d'entrée différents sur N fibres de sortie ou ports de sortie différents, en conservant les fréquences optiques.

**14.** Système de réseau selon l'une des revendications 10 à 13, où les noeuds de réseau présentent des composants optiques et/ou électriques passifs et/ou actifs, de préférence des filtres optiques, des commutateurs optiques, des commutateurs, des routeurs et d'autres composants de traitement de paquets IP.

**Fig. 1**

Fig. 2

Fig. 3

Fig. 4

Fig. 5

AWG FSR 9 z.B.
4 x 200 GHz = 800 GHz

Zyklische AWG
Frequenzfunktionalität

Optisches
Spektrum

AWG Frequenzkanal (7)
Bandbreite z.B. B=200 GHz

DWDM Kanalnummer
(z.B. 50 GHz Bandbreite)

0    3 4    7 8    11 12    15 16    19 20    23 24    27 28    31 32    35 36    • • •

Zyklisches Band 10
der Ordnung 0
(Basisband 10 )

Zyklisches Band 10
der Ordnung 1

Zyklisches Band 10
der Ordnung 2    • • •

# Fig. 6

Optisches
Spektrum

DWDM Frequenzkanal
Bandbreite z.B. B=50 GHz

DWDM
Kanalnummer
(z.B.
50 GHz
Bandbreite)

0   1   2   3   4   5   6   7   8   9   10  11  12  13  14  15    88  89  90  91  92  93  94  95

AWG Frequenzkanal (7) #1
Bandbreite 400 GHz

AWG Frequenzkanal (7) #2
Bandbreite 400 GHz

• • •

AWG Frequenzkanal (7) #12
Bandbreite 400 GHz

C-Band mit 4800 GHz Bandbreite für 96 DWDM Frequenzkanäle mit je 50GHz Bandbreite
entspricht z.B. einem AWG Basisband mit 12 AWG Frequenzkanälen mit je 400 GHz Bandbreite

# Fig. 6a

DWDM Link Kapazität

in Tbit/s

| | |
|---|---|
| ······· | 350Gb/s@50GHz; SE=7,0Bit/s/Hz; max 33,6 TB/s |
| — · | 300Gb/s@50GHz; SE=6,0Bit/s/Hz; max 28,8 TB/s |
| ---- | 250Gb/s@50GHz; SE=5,0Bit/s/Hz; max 24,0 TB/s |
| — · | 200Gb/s@50GHz; SE=4,0Bit/s/Hz; max 19,2 TB/s |
| – – | 150Gb/s@50GHz; SE=3,0Bit/s/Hz; max 14,4 TB/s |
| – · – | 100Gb/s@50GHz; SE=2,0Bit/s/Hz; max 9,60 TB/s |
| —— | 50Gb/s@50GHz; SE=1,0Bit/s/Hz; max 4,80 TB/s |
| ━ ━● | 40Gb/s@25GHz; SE=1,6Bit/s/Hz; max 7,68 TB/s |
| ●●●●● | 10Gb/s@6,25GHz; SE=1,6Bit/s/Hz; max 7,68 TB/s |
| – – | 10Gb/s@12,5GHz; SE=0,8Bit/s/Hz; max 3,84 TB/s |

**DWDM Kanal Nummer**

# Fig. 7

Fig. 8

Fig. 9

optischer 8×1
Multiplexer für DWDM
Frequenzkanäle z.B. der
Bandbreite B=50GHz

optischer 12×1
Multiplexer für AWG
Frequenzkanäle z.B. der
Bandbreite B=400GHz

optische AWG
Frequenzkanäle z.B. der
Bandbreite B=400GHz (7)

optischer 12×1
Demultiplexer für AWG
Frequenzkanäle z.B. der
Bandbreite B=400GHz

optischer 8×1
Demultiplexer für
DWDM Frequenzkanäle
z.B. der Bandbreite
B=50GHz

optische DWDM
Frequenzkanäle
z.B. der Bandbreite
B=50GHz

optische AWG
Frequenzkanäle
z.B. der Bandbreite
B=400GHz (7)

optische AWG
Frequenzkanäle
z.B. der Bandbreite
B=400GHz (7)

optische DWDM
Frequenzkanäle
z.B. der Bandbreite
B=50GHz

λ-Shuffle

$f_1$ $f_2$ $f_3$ ••• $f_{11}$ $f_{12}$
Optische Frequenz

$f_1$ $f_2$ $f_3$ ••• $f_{11}$ $f_{12}$
Optische Frequenz

in    out
12x12
passive
AWG

Kernnetzrand → ◄─────── Kernnetz ───────► ◄─ Kernnetzrand

## Fig. 10

optischer 96×1
Multiplexer für DWDM
Frequenzkanäle der
Bandbreite B=50GHz

optische AWG
Frequenzkanäle z.B. der
Bandbreite B=400GHz (7)

optischer 96×1 Wavelength
Selectiv Switch WSS für AWG
Frequenzkanäle der Bandbreite
B=50GHz

optische DWDM
Frequenzkanäle
z.B. der Bandbreite
B=50GHz

optische DWDM
Frequenzkanäle
z.B. der Bandbreite
B=50GHz

12x12
passive
AWG

λ-Shuffle

$f_1\ f_2\ f_3\ \bullet\bullet\bullet\ f_{95}f_{96}$
Optische Frequenz

$f_1\ f_2\ f_3\ \bullet\bullet\bullet\ f_{95}f_{96}$
Optische Frequenz

Kernnetzrand ⟶ ⟵ Kernnetz ⟶ ⟵ Kernnetzrand

# Fig. 11

aWSS der M optische Eingangssignale mit flexiblen Bandbreiten auf M
Eingangsfasern adaptiv mit entsprechend angepassten
Kanalbandreiten auf einen Faserausgang schaltet; die maximale
Bandbreite ist durch den AWG Frequenzkanal bestimmt (z.B. 400 GHz)

optische AWG
Frequenzkanäle z.B.
der Bandbreite
B=400GHz (7)

aWSS der M optische Eingangssignale mit flexiblen Bandbreiten auf
einer Eingangsfasern adaptiv mit entsprechend angepassten
Kanalbandreiten auf M Ausgangsfasern schaltet; die maximale
Bandbreite ist durch den AWG Frequenzkanal bestimmt (z.B. 400 GHz)

optische flexible
Transceiverz.B. der
Bandbreite
B=50GHz

in    out

12x12

passive
AWG

λ-Shuffle

$f_1$ $f_2$ $f_3$  • • •  $f_{95}$$f_{96}$
Optische Frequenz

$f_1$ $f_2$ $f_3$  • • •  $f_{95}$$f_{96}$
Optische Frequenz

optische DWDM
Frequenzkanäle
z.B. der Bandbreite
B=50GHz

Kernnetzrand →            ←  Kernnetz  →        ← Kernnetzrand

# Fig. 12

Fig. 13

**Fig. 14**

Fig. 15

Fig. 16

**IN DER BESCHREIBUNG AUFGEFÜHRTE DOKUMENTE**

**In der Beschreibung aufgeführte Patentdokumente**

- US 7606494 B1
- US 7761007 B2
- US 20080131128 A
- WO 9833287 A
- EP 1761102 A1
- US 20070092248 A
- EP 1594241 A1
- US 7356258 B
- US 7965911 B
- WO 0204989 A2
- US 20020048066 A1
- US 6947670 B1

- US 20110013911 A1
- US 20100098406 A
- US 20020141453 A1
- US 7184666 B1
- WO 02075403 A1
- US 20020186432 A1
- US 20040042404 A1
- US 20020191247 A1
- US 20030099014 A1
- US 20110135312 A1
- US 20020165962 A1
- US 20020191250 A1


**In der Beschreibung aufgeführte Nicht-Patentliteratur**

- **SCHIANO, MARCO et al.** Lambda switched future photonic network development. *OFC 2012, paper OW4A.4,* 2012
- **N. SAMBO et al.** Lightpath provisioning in wavelength switched optical networks with flexible grid. *ECOC2011, paper We.10.P1.96,* 2011
- 100G in the network of Deutsche Telekom. *OPTICAL FIBER TECHNOLOGY,* vol. 17 (5), 368-376
- Field Trial of Full-Mesh WDM Network (AWG-STAR) in Metropolitan/local Area. JOURNAL OF LIGHTWAVE TECHNOLOGY. IEEE SERVICE CENTER, vol. 22, 329-336
- Performance of deflection routing algirithms in IP optical transport networks. **PATTAVINA,A.** Computer Networks. Elsevier, 08. Februar 2006, vol. 50, 207-218

- **RENÉ-JEAN ESSIAMBRE et al.** Capacity Limits of Optical Fiber Networks. *Journal of Lightwave Technology,* 15. Februar 2010, vol. 28 (4
- **JIANJUN YU et al.** Field Trial Nyquist-WDM Transmission of 8×216.4Gb/s PDM-CSRZ-QPSK Exceeding 4b/s/Hz Spectral Efficiency. *OFC,* 2012
- **RENE-JEAN ESSIAMBRE ; GERHARD KRAMER ; PETER J. WINZER ; GERARD J. FOSCHINI ; BERNHARD GOEBEL.** Capacity Limits of Optical Fiber Networks. *Journal of Lightwave Technology,* 15. Februar 2010, vol. 28, 662-701
- **RENÉ-JEAN ESSIAMBRE ; GERHARD KRAMER ; PETER J. WINZER ; GERARD J. FOSCHINI ; BERNHARD GOEBEL.** Capacity Limits of Optical Fiber Networks. *Journal of Lightwave Technology,* 15. Februar 2010, vol. 28 (4), 662-701